# EUROPÄISCHE PATENTSCHRIFT

(11) **EP 2 038 564 B1**
(45) Veröffentlichungstag und Bekanntmachung des Hinweises auf die Patenterteilung: **30.12.2009**
(21) Anmeldenummer: 07765721.1
(22) Anmeldetag: 29.06.2007
(51) Int. Cl.: F16D 65/853, F16D 55/00, F16D 65/78

(54) **LAMELLENBREMSE IN EINEM AUTOMATGETRIEBE MIT STEUERBARER KÜHLÖLVERSORGUNG UND VERFAHREN ZUM BETREIBEN DERSELBEN**
MULTIPLE-DISK BRAKE IN AN AUTOMATIC TRANSMISSION HAVING CONTROLLABLE COOLING OIL SUPPLY AND METHOD FOR OPERATING THE SAME
FREIN À DISQUES MULTIPLES DANS UNE BOÎTE DE VITESSES AUTOMATIQUE AVEC ALIMENTATION D'HUILE DE REFROIDISSEMENT RÉGLABLE ET SON PROCÉDÉ D'EXPLOITATION

(30) Priorität: 10.07.2006 DE 102006031787
(43) Veröffentlichungstag der Anmeldung: 25.03.2009
(73) Patentinhaber: ZF Friedrichshafen AG, 88038 Friedrichshafen (DE)
(72) Erfinder: HAUPT, Josef, 88069 Tettnang (DE)
(86) Internationale Anmeldenummer: PCT/EP2007/056537
(87) Internationale Veröffentlichungsnummer: WO 2008/006709

(56) Entgegenhaltungen:
- DE-A1- 10 230 183
- US-B1- 6 202 814

## Beschreibung

Die Erfindung betrifft eine Lamellenbremse in einem Automatgetriebe mit steuerbarer Kühlölversorgung gemäß dem Oberbegriff des Patentanspruchs 1. Weiterhin betrifft die Erfindung ein Verfahren zum Betreiben dieser Lamellenkupplung.

Derartige Lamellenbremsen sind an sich bekannt und werden beispielsweise als Anfahr-oder Schaltelemente in Automatgetrieben für Kraftfahrzeuge genutzt. Nasslaufende Lamellenkupplungen werden üblicherweise von radial innen nach radial außen mit einem Kühlöl versorgt, da durch die Drehbewegung der Eingangsseite bzw der Ausgangsseite der Kupplung dieses Kühlöl radial nach außen geschleudert und somit eine Förderwirkung für das in der Kupplung erwärmte Kühlöl erreicht wird. Bei einer nasslaufenden Lamellenbremse ist diese radiale Förderung des Kühlöls nicht oder nur sehr schlecht möglich, da bei einem schließen der Bremse ein drehendes Bremsenbauteil gegen ein stehendes Bremsenbauteil unter Energieaufnahme zum Stillstand gebracht wird. Derartige Lamellenbremsen werden daher entweder vollständig im Kühlöl eingetaucht betrieben, oder aber über ein Druckgefälle gezielt von außen mit Kühlöl versorgt.

Bei einer Lamellenbremse, die über ein Druckgefälle mit Kühlöl versorgt wird; kann das Kühlöl von radial innen nach radial außen, also in Richtung zum Getriebegehäuse geführt werden. Hierzu können an der Außenseite des Außenlamellenträgers der Lamellenbremse Durchlassöffnungen ausgebildet sein, durch welche das Kühlöl innerhalb des Lamellenpaketes nach radial außen und von dort aus in einen Kühlölsumpf geleitet wird.

Nachteilig an einem solchen Aufbau ist, dass dann, wenn die Lamellenbremse nach einer Schlupfbetriebsphase geschlossen wird, Wärme aus der Lamellenbremse nur noch sehr schlecht abgeführt werden kann. Dies liegt unter anderem daran, dass die drehbaren Lamellen der Lamellenbremse keine Drehbewegung mehr durchführen, so dass das Kühlöl der Schwerkraft folgend drucklos auf den radial inneren Ringbereich der Lamellenbremse läuft und lediglich den schmalen unteren Segmentbereich der Lamellen des Lamellenpaketes benetzt. Der Volumenstrom pro Zeiteinheit und der Wärmeabtransport mittels des Kühlöls durch die Lamellenbremse sind dabei vergleichsweise gering, so dass die thermische Leistungsfähigkeit einer solchen Lamellenbremse sehr begrenzt ist.

Insbesondere dann, wenn eine solche Lamellenbremse im Automatgetriebe zur Realisierung von Zusatzfunktionen schlupfend betrieben wird, wie beispielsweise, bei einer an sich bekannten Standabkopplung oder einer Diesel- bzw. Ottomotor-Anfahrunterstützung, wirkt sich das thermische Verhalten der nach dem Schlupfbetrieb geschlossenen Lamellenbremse bei fehlender Nachkühlung sehr nachteilig auf den Betrieb des Automatgetriebes aus. So kann die Starttemperatur bei einer Folgeoperation, wie ein erneutes Anfahren, sehr viel höher sein als beim vorherigen Anfahrvorgang, wodurch die Temperatur der Lamellenbremse mit jedem weiteren Anfahren erhöht wird.

Der beschriebene zu geringe Wärmeabtransport aus der Lamellenbremse führt zu einer Schädigung des Kühlöls, welches dann in anderen Bereichen des Automatgetriebes seine Schmierfunktion nicht mehr in dem gewünschten Maß wahrnehmen kann. Eine solche Schädigung des Kühlöls bzw. Schmieröls ließ sich zwar durch längere zeitliche Abstände zwischen zwei Anfahrvorgängen vermeiden, dies stellt für einen Kraftfahrzeugbetrieb jedoch eine nicht akzeptable Betriebseinschränkung dar.

Um zu erreichen, dass die Lamellenbremse auch im geschlossenen und daher stillstehenden Zustand einen ausreichend großen Kühlölstrom für alle Lamellenbereiche erhält, kann das Kühlöl bei einer anderen technischen Lösung, radial gesehen, von der Außenseite der Lamellen unter einem bestimmten statischen Druck der Lamellenbremse zugeführt werden. Die Lamellenbremse muss dazu jedoch axial so abgedichtet sein, dass das unter dem genannten Druck stehende Kühlöl größtenteils radial durch das Lamellenpaket gepresst wird. Die Abdichtung kann dazu einerseits durch den am Lamellenpaket angepressten Kolben des der Lamellenbremse zugeordneten hydraulischen Bremsaktuators und andererseits durch eine Stützscheibe am anderen Ende des Lamellenpaketes erfolgen, wobei sich letztere an dem Getriebegehäuse abstützt. Nach dem Ende einer Schlupfbetriebsphase der Lamellenbremse und/oder einer folgenden Nachkühlphase kann die Kühlöldurchleitung bei geöffneter Lamellenbremse dann abgeschaltet werden.

Werden bei diesem Aufbau jedoch keine weiteren konstruktiven Maßnahmen getroffen, so staut sich beim Betrieb des Automatgetriebes bei geöffnete Lamellenbremse das Kühlöl, das im Automatgetriebe von radial innen von anderen Getriebeteilen, beispielsweise einem Getrieberadsatz, einer radial inneren lamellenbremse und/oder einer Lamellenkupplung, zugeführt wird an der im Getriebegehäuse radial außen angeordneten Lamellenbremse, da diese wie beschrieben axial abgedichtet ist. Dadurch wirkt auf die Lamellen ein vergleichsweise hohes Schleppmoment, welches letztlich in nicht akzeptabler Weise den Kraftstoffverbrauch eines solchermaßen ausgestatteten Fahrzeuges vergrößern sowie dessen Höchstgeschwindigkeit reduzieren kann.

Der radial innere Bereich des Lamellenpaketes der Lamellenbremse könnte zwar durch ein Ölleitblech vor einem allzu großen Ölstrom von anderen im Getriebegehäuse radial innen angeordneten Getriebebauteilen geschützt werden, durchweg steht dafür aber kein Bauraum im Getriebegehäuse zur Verfügung.

Vor diesem Hintergrund ist aus der DE 41 36 040 C1 eine konventionelle nasslaufende Lamellenkupplung bekannt, bei der die Kühlölversorgung der Kupplungslamellen von radial innen nach radial außen erfolgt. Dazu sind in einem Innenlamellenträger im Bereich unterhalb der Reibbeläge der Kupplungslamellen radiale Öffnungen ausgebildet, durch die das Kühlöl gezielt zu denselben leitbar ist.

Außerdem ist aus der DE 102 30 183 A1 eine nasslaufende Lamellekupplung bzw. Lamellenbremse bekannt, bei welche der Kühlöldurchfluss durch das durch die Kupplungslamellen gebildete Lamellenpaket gemäß einer ersten Ausführungsform von radial innen nach radial außen bzw. in einer zweiten Ausführungsform von radial außen nach radial innen erfolgt. Der Kühlölstrom wird dabei durch eine definierte Druckdifferenz zwischen dem Ort des Kühlöleintritts und dem Ort des Kühlölaustritts in das Lamellenpaket aufrechterhalten. Zur gezielten Kühlölführung ist der Kupplungs- bzw. Bremslamellenraum über eine Abstützung der letzten Außenlamelle am Getriebegehäuse und im betätigten Fall über den an der anderen Endlamelle anliegenden Kolben durch ein metallisches Berühren der Bauteile oder mittels separater Elastomerdichtungen abgedichtet.

Schließlich offenbart die US 6,202,814 B1 eine Lamellenbremse in einem Automatgetriebe, bei der über einen radial oberhalb des Lamellenpaketes ausgebildeten Ringkanal von außen nach innen ein Kühlöl zu dem Lamellen führbar ist, wobei die Kühlölzufuhr über ein separates Ventil steuerbar ist.

Weiterhin ist aus der DE 10 2006 024 445 A1 die Konstruktion einer Lamellenbremse mit Umkehrung der Kühlölströmung beim Schließen der Bremse bekannt. Die Bremse weist eine am Außenlamellenträger der Bremse axial verschiebbar eingespannten und zum Außenlamellenträger hin axial verschiebbar abgedichtete haubenförmige Stauscheibe auf, auf die der Kolben der Bremse beim Schießen des Lamellenpaketes drückt und die zusammen mit dem Außenlamellenträger und der Endlamelle der Bremse einen auf der kolbennahen Seite des Lamellenpaketes angeordneten ringförmigen Ölraum bildet. Bei geöffneter Bremse wird dem Lamellenpaket vom Innenlamellenträger der Bremse her Kühlmittel über Radialbohrungen des Innenlamellenträgers zugeführt, welches durch das Lamellenpaket radial von innen nach außen strömt und dann durch den seitlich neben dem Lamellenpaket angeordneten Ölraum hindurch über einen Ringspalt zwischen Stauscheibe und Endlamelle wieder radial nach innen abfließt. Bei geschlossener Bremse ist der genannte Ringspalt infolge des an die Stauscheibe drückenden Kolbens geschlossen, sodass das in dem Ölraum befindliche Kühlmittel nicht mehr abfließen kann. Dabei wird bei geschlossener Bremse dem Lamellenpaket Kühlöl über eine Zuleitung im Außenlamellenträger von außen in den Ölraum geleitet, welches dann über die Lamellenverzahnurig den einzelnen Lamellen gelangt und das Lamellenpaket über Belagnuten radial von außen nach innen durchströmt und dann über die genannten Radialbohrungen des Innenlamellenträgers radial nach innen abläuft.

Der Erfindung liegt die Aufgabe zugrunde, eine nasslaufende Lamellenbremse in einem Automatgetriebe der genannten Art derart weiterzubilden, dass diese besser als bisher mit einem Kühlöl versorgbar ist. Insbesondere sollen bei vorgegebenen Bauraumbeschränkungen die Mittel zur Kühlölführung an der Lamellenbremse in der Lage sein, während eines schlupfenden Betriebes oder bei geschlossener Lamellenbremse Wärme im gewünschten Umfang über einen Kühlölstrom abzuführen, und bei geöffneter Lamellenbremse die genanten Schleppmomentverluste zu minimieren. Eine weitere Aufgabe besteht darin, ein Verfahren zum Betreiben einer solchen Lamellenbremse vorzustellen.

Die Lösung dieser Aufgabe ergibt sich aus den Merkmalen der beiden unabhängigen Patentansprüche, während vorteilhafte Ausgestaltungen oder Weiterbildungen der Erfindung in den zugeordneten Unteransprüchen definiert sind.

Der Erfindung liegt die Erkenntnis zugrunde, dass sich die geschilderten technischen Problems lösen lassen, wenn die Kühlöldurchleitung durch die Lamellenbremse in Abhängigkeit vom Betriebszustand derselben von radial außen nach radial innen oder von radial innen nach radial außen erfolgt. Dabei soll bei geöffneter Lamellenbremse das Kühlöl im Getriebegehäuse von radial innen nach radial außen durch und/oder über dieselbe geführt und dann in den Kühlölsumpf abgeleitet werden, während im Schlupfbetrieb oder bei geschlossener Lamellenbremse das Kühlöl von radial außen kommend nach radial innen durch die Lamellenbremse geführt wird. Der Raum um die Lamellenbremse herum ist vorzugsweise weitgehend gegen einen axialen Kühlölaustritt abgedichtet, um die Strömungslenkung zu begünstigen. Die Umschaltung der Strömungsrichtung des Kühlöls erfolgt über geeignet Mittel, die eine radiale Öffnung im Außenlamellenträger der Lamellenkupplung betriebssituationsabhängig freigeben oder verschlißen.

Demnach betrifft die Erfindung eine Lamellenbremse in einem Automatgetriebe, mit einem Innenlamellerträge und einem Außenlamellenträger, mit an den Lamellenträgern axial wechselweise angeordneten Innenlamellen und Außenlamellen, mit Reibbelägen an den Innen- und/oder Außenlamellen, mit einem Kolben einer druckmittelbetätigbaren Kolben-Zylinder-Anordnung, mittels den die Innenlamellen und Außenlamellen mit einer die Lamellenbremse schließenden Kraft beaufschlagbar sind, und mit einer kolbenfernen Endlamelle oder Stützlamelle, die für das durch die Lamellen aufgebaute Lamellenpaket ein axiales Widerlager bildet, wobei die Lamellenbremse und/oder die sie umgebenden Bauteile so ausgebildet sind, dass die Lamellen mit einem Kühlöl benetzbar sind. Gemäß der Erfindung ist zudem vorgesehen, dass die Lamellenbremse derart ausgebildet ist, dass das Kühlöl in Abhängigkeit vom Betriebszustand derselben in radial unterschiedlichen Richtungen über und/oder durch das Lamellenpaket leitbar ist.

Die von der jeweiligen Betriebssituation abhängige unterschiedliche Kühlölführung durch und/oder über die Lamellen der Lamellenbremse erlaubt vorteilhaft im geöffneten Zustand einerseits eine große Schleppmomente vermeidende Abfuhr von Kühlöl, welches von anderen Getriebebauteilen in Richtung zur Lamellenbremse abfließt, und bei geschlossener bzw. schlupfend betriebener Lamellenbremse eine unter statischem Druck erfolgende Kühlölzufuhr von radial außen nach radial innen durch diese Lamellebremse, um in diesem Betriebszustand ohne oder mit nur geringer dynamischer Förderung von Kühlöl im Bereich der Lamellenbremse eine ausreichende Ableitung von Wärme aus derselben zu ermöglichen. Als besonders vorteilhaft wird beurteilt, dass diese Lamellenbremse auch bei Stillstand der rotierbaren Lamellen in einer Nachkühlphase aktiv mit Kühlöl versorgbar ist.

Es kann vorgesehen sein, dass zwischen dem Kolben der Kolben-Zylinder-Anordnung und der kolbennahen Innenlamelle bzw. Außenlamelle eine kolbenseitige Endlamelle auf einem der beiden Lamellenträger angeordnet ist.

Die erfindungsgemäße Lamellenbremse ist in axialer Richtung weitgehend gegen einen Kühlölaustritt abgedichtet ausgebildet. Durch diese Maßnahme wird die radiale Kühlölstromführung durch die Lamellenbremse vor allem bei geschlossener Bremse bzw. im Schlupfbetrieb begünstigt, da ein axiales Entweichen von Kühlöl weitgehend vermieden wird und dieses damit für Kühlzecke zur Verfügung steht.

Hierzu kann vorgesehen, dass die axiale Abdichtung der Lamellenbremse über gesonderte Dichtmittel an dem Kolben und/oder der kolbenseitigen Endlamelle und/oder der kolbennahen Innenlamelle bzw. Außenlamelle und/oder der kolbenfernen Endlamelle und/oder an einer kolbenfernen Stützlamelle realisiert ist. Die axiale Abdichtung der Lamellenbremse kann aber auch über dichtend ausgebildete metallische Oberflächen an dem Kolben und/oder der kolbenseitigen Endlamelle und/oder der kolbennahen Innenlamelle bzw. Außenlamelle und/oder der kolbenfernen Endlamelle und/oder an der kolbenfernen Stützlamelle realisiert sein.

Hinsichtlich der Kühlölführung ist erfindungsgemäß vorgesehen, dass der Außenlamellenträger im Bereich des Lamellenpaketes eine oder mehrere radiale Öffnungen aufweist, durch die das Kühlöl dem Lamellenpaket zuleitbar oder von diesem ableitbar ist.

Die zumindest eine radiale Öffnung im Außenlamellenträger mündet bevorzugt ein einen Ringraum, der zumindest an einem axialen Ende des Lamellenpaketes zwischen dem Kolben und der kolbenseitigen Endlamelle und/oder zwischen der Endlamelle und der Stützlamelle ausgebildet ist. Von dort gelangt das Kühlöl zu den Bremslamellen, die zumindest teilweise radiale Nuten in dem Reibbelag einer jeden Innenlamelle und/oder Außenlamelle aufweisen, durch die das Kühlöl von dem einströmseitigen radialen. Ende zu dem abströmseitigen radialen Ende der Lamellen des Lamellenpaketes strömen kann. Die zumindest eine Nut im Reibbelag ist dabei radial geradlinig oder radial gekrümmt augebildet, wodurch unterschiedliche Fördercharakteristika und Verweilzeiten des Kühlöls im Lamellenpaket erreichbar sind.

Um die Durchströmung der Lamellenbremse weiter zu begünstigen, weist der Innenlamellenträger radiale Öffnungen zum Ein- oder Ausströmen von Kühlöl aus dem bzw. in das Lamellenpaket auf. Zudem ist in an sich bekannter Weise vorgesehen, dass eine Mitnahmeverzahnung an dem Außenlamellenträger zur Weiterleitung des Kühlöls von dem Ringraum zu den Lamellen abschnittweise wenigsten einen fehlenden Zahn bzw. eine Zahnlücke im Mitnahmeprofil aufweist. Durch diese Lücke kann das Kühlöl im Bereich des Außenlamellenträgers innerhalb der Lamellenbremse zunächst ein Stück axial zu den Bremslamellen zurücklegen, worauf noch weiter unten eingegangen wird.

Um die Kühlwirkung des Kühlöl an der Lamellenbremse zu optimieren, ist erfindungsgemäß vorgesehen, dass dieses Kühlöl im geöffneten Zustand der Lamellenbremse von radial innen nach radial außen durch dieselbe leitbar ist. Die Angaben von radial innen und radial außen beziehen sich dabei auf die axiale Mittel des Automatgetriebes, in dessen gehäusenahen Bereich die Lamellenbremse bevorzugt angeordnet ist. Dabei ist der Außenlamellenträger mit dem Getriebegehäuse drehfest verbunden oder sogar ein Bestandteil desselben.

In einer Weiterbildung der Erfindung kann vorgesehen sein, dass das Kühlöl im geöffneten Zustand der Lamellenbremse derselben von anderen Getriebekomponenten zuleitbar ist. Diese können beispielsweise die Zahnräder eines ersten und/oder eines zweiten Radsatzes und/oder eine radial innen angeordnete Lamellenbremse oder Lamellenkupplung des Automatgetriebes sein.

Als weiteres wichtiges konstruktives Merkmal einer erfindungsgemäß ausgebileten Lamellenbremse ist vorgesehen, dass das Kühlöl bei geschlossener Lamellenbremse und/oder bei schlupfender Betriebsweise der Lamellenbremse von radial außen nach radial innen durch diese leitbar ist. Dies erfolgt unter einem statischen Druck und nicht dynamischen Druck, da bei geschlossener Lamellenbremse keine das Entstehen eines dynamischen Kühlöldrucks an der Lamellenbremse ermöglichende Rotation der drehbaren Bremslamellen stattfindet.

Die Zufuhr des Kühlöls erfolgt in diesen Betriebssituationen durch ein gesondertes Ölzuführmittel, das beispielsweise als ein Ventil oder als ein radial an die Lamellenbremse heranführbares Bauteil ausgebildet. In einer anderen Variante kann das Ölzuführmittel als ein Drehschieber ausgebildet sein, bei dem ein ansteuerbares, drehbares Bauteil zumindest eine Öldurchlassöffnung hinsichtlich eines Kühlöldurchtritts absperrt oder öffnet.

Im vorletzteren Fall ist das Ölzuführmittel zur Weiterleitung von Kühlöl an das radial äußere Ende der Öffnung im Außenlamellenträger diese ringförmig abdichtend heranführbar, und nach Beendigung der genannten Betriebsweisen die genannte Öffnung freigebend von dem Außenlamellenträger radial entfernbar.

In einer konkreten maschinenbautichen Ausführungsform ist dieses Ölzuführmittel als ein radial, verschiebbares Zuführrohr ausgebildet, welches, durch einen die Lamellenbremse schließenden oder in den Schlupfbetrieb bringenden Steuerdruck radial verschiebbar ausgebildet ist. Mit diesem Steuerdruck wird auch der Kolben der die Lamellenbremse betätigenden Kolben-Zylinder-Anordnung im Automatgetriebe von einem diesbezüglichen elektro-hydraulischen Steuerungsgerät angesteuert.

In diesem Zusammenhang kann vorgesehen sein, dass das Zuführrohr an seinem radial dem Außenlamellenträger zugewandten Ende eine Dichtung aufweist, oder dass eine die Öffnung umgreifende Dichtung an der radialen Außenseite des Außenlamellenträgers angeordnet ist. Diese Dichtung kann beispielsweise ein in einer zugeordneten Ringnut aufgenommener O-Ring sein.

Das als Zuführrohr oder als ein hydraulisches Schaltventil ausgebildete Ölzuführmittel ist bevorzugt in das genante elektro-hydraulische Steuerungsgerät für das Automatgetriebe integriert beziehungsweise an diesem angeordnet.

Das Schaltventil kann dabei ein gesondertes Gehäuse aufweisen, in dem ein durch eine Feder belasteter Kolben axialverschiebbar angeordnet ist, und bei dem der Kolben eine Übergabebohrung für das Kühlöl zu der genannten radialen Öffnung im Außenlamellenträger freigeben und verschließen kann. Die Zufuhr des Kühlöls in das Schaltventil erfolgt über eine Zulaufbohrung in dem Gehäuse desselben.

Außerdem weist das Schaltventil bevorzugt eine Ablaufbohrung auf, durch die Kühlöl beispielsweise dann aus dem Ventilgehäuse ableitbar ist, wenn die Lamellenbremse geöffnet betrieben wird, und über diese Kühlöl in Richtung zu einem Kühlölsumpf geleitet werden soll.

Das Gehäuse des Schaltventils kann einstückig mit dem Getriebegehäuse beziehungsweise einstückig mit dem Gehäuse des hydraulischen Steuergerätes ausgebildet oder separat vorhanden sein.

Zur vorteilhaften Herstellung eines in dem Getriebegehäuse integrierten Schaltventilgehäuses ist dieses hinsichtlich seiner Steuerventilachse quer zur Getriebehauptachse, also quer zu der Längsachse des Getriebegehäuses ausgerichtet angeordnet. Sofern das Schaltventilgehäuse als ein separates Gehäuse ausgebildet ist, wird eine Anordnung desselben im Getriebegehäuse bevorzugt, bei der die Steuerventilachse parallel zu der Getriebehauptachse ausgerichtet ist. Außerdem kann vorgesehen sein, dass die Steuerventilachse schräg, also in einem Winkel ungleich 90° zur Getriebehauptachse ausgerichtet ist.

Ein weiteres Merkmal das Schaltventilgehäuse betreffend ist, dass das Gehäuse als Entlüftungsmittel für den die Ventilfeder aufnehmenden Federraum eine axiale Entlüftungsbohrung an der federnahen Stirnseite des Gehäuses oder einen radialen Entlüftungsschlitz aufweist, wobei letzterer separat oder als lang gezogene Ablaufbohrung für das Kühlöl im Schaltventilgehäuse ausgebildet sein kann.

Um die Kühlölführung bei geöffneter Lamellenbremse axial um dieselbe herum in Richtung zum Kühlölsumpf zu begünstigen, ist gemäß einer weiteren Ausgestaltung der Erfindung vorgesehen, dass im Bereich der kolbenfernen Seite der Stützlamelle ein Abflusskanal oder eine Abflussbohrung für das Kühlöl in oder an einem gehäusefesten Bauteil des Automatgetriebes ausgebildet ist.

In einer weiteren Ausführungsform kann das Schaltventil zur radialen Umrichtung des Kühlölstromes über und/oder durch das Bremslamellenpaket aber auch so ausgebildet sein, dass es von einem separaten Steuerdruck schaltbar ist, wobei dieser unmittelbar oder mittelbar von demjenigen Steuerdruck abhängt, mit dem der Kolben des Bremslamellenaktuators zum Schließen der Lamellenbremse angesteuert wird.

Ein solches Schaltventil weist in konkreter Bauweise ein Ventilgehäuse mit einer Steuerdruckbohrung zur Zuführung des Steuerdrucks, einen Steuerdruckraum zur Aufnahme des Steuerdruckmittels, eine Zulaufbohrung für das Kühlöl, eine Ablaufbohrung für das Kühlöl und eine Übergabebohrung für das Kühlöl auf. Zudem ist ein erster, die in Strömungsverbindung mit der Öffnung im Außenlamellenträger stehende Übergabebohrung öffnender oder schließender Kolben und einen von dem Steuerdruckmittel beaufschlagbarer zweiter Steuerkolben vorgesehen, wobei die beiden Kolben über eine Kolbenstange axial miteinander verbunden und von einer Feder mit einer Axialkraft beaufschlagbar sind.

Eine andere Weiterbildung der Erfindung sieht ein hydraulisches Schaltventil vor, welches ein hohlzylindrisches Gehäuse aufweist, das radial unterhalb der radialen Öffnung im Außenlamellenträger derartig befestigt ist, dass die innere Mantelfläche des Gehäuses die Öffnung im Außenlamellenträger umgreift, bei dem in dem Gehäuse ein im Längsschnitt vorzugsweise topfförmiger Kolben mit einer Bodenbohrung axial verschiebbar aufgenommen ist, und bei dem in dem Gehäuse seitliche Öffnungen ausgebildet sind, die in Abhängigkeit von der Position des Kolbens durch dessen Seitenwand geöffnet oder verschlossen werden können. Der Kolben in diesem Steuerungsventil kann auch geschlossenzylindrisch ausgebildet sein.

Bevorzugt ist das Gehäuse dieses hydraulischen Schaltventils mit seinem einen axialen Ende in eine radiale Ausnehmung in dem Getriebegehäuse und/oder in der Außenseite des Außenlamellenträgers eingesetzt, und mit seinem anderen Ende auf dem Gehäuse des hydraulischen Getriebesteuergerätes angeordnet.

Außerdem ist es vorteilhaft, wenn zumindest ein Dichtmittel zur Abdichtung des Zylinderraumes zwischen dem Gehäuse des hydraulischen Schaltventils und dem Gehäuse des hydraulischen Getriebesteuergerätes angeordnet ist. Durch diese bauliche Maßnahme wird eine optimale Weiterleitung vom Kühlöl ohne Leckage gewährleistet sowie ein Spielausgleich beim Einbau des Steuerungsventils zwischen dem Getriebegehäuse und dem Steuerungsgerät ermöglicht.

Das hydraulische Schaltventil ist insbesondere derartig aufgebaut, dass bei einer Zuleitung von Kühlöl in den Zylinderraum von radial außen nach radial innen der Kolben in Richtung zum Außenlamellenträger im Gehäuse verschließend verschiebbar ist, und dass bei einer Zuleitung von Kühlöl in den Zylinderraum von radial innen nach radial außen der Kolben in die entgegengesetzte Richtung bewegbar ist, wobei dieser die seitlichen Öffnungen im Gehäuse des Schaltventils freigibt.

Bevorzugt ist dabei vorgesehen, dass die die seitlichen Öffnungen im Gehäuse freigebende Bewegung des Kolbens durch eine Zuleitung von Kühlöl von radial innen nach radial außen in den Kolben und/oder durch die Rückstellkraft einer Feder bewirkt wird, welche sich einenends am Kolben beziehungsweise am Topfboden des Kolbens und anderenends an der radialen Außenseite des Außenlamellenträgers bzw. des Getriebegehäuses abstützt.

Hinsichtlich der Gegenrichtung ist vorgesehen, dass die die seitlichen Öffnungen im Gehäuse des Schaltventils verschließende Bewegung des Kolbens durch eine Zuleitung von Kühlöl von radial außen nach radial innen in den Zylinderraum des Gehäuses unterhalb des Bodens des Kolbens bewirkt wird

Wie eingangs erwähnt wurde, betrifft die Erfindung auch ein Verfahren zum Betreiben einer Lamellenbremse gemäß der Erfindung. Dieses Verfahren sieht vor, dass das Kühlöl in Abhängigkeit vom Betriebszustand der Lamellenbremse in radial unterschiedlichen Richtungen durch und/oder über deren Lamellenpaket geleitet wird.

Wie weiter oben schon ausgeführt, ermöglicht die von der jeweiligen Betriebssituation abhängige unterschiedliche Kühlölführung durch und/oder über die Lamellen der Lamellenbremse vorteilhaft im geöffneten Zustand einerseits eine große Schleppmomente vermeidende Abfuhr von zuviel vorhandenem Kühlöl im Bereich der Lamellenbremse, welches von anderen Getriebebauteilen in Richtung zur Lamellenbremse abfließt. Bei geschlossener bzw. schlupfend betriebener Lamellenbremse erfolgt dagegen eine aktive, unter statischem Druck stehende Kühlölzufuhr von radial außen nach radial innen durch das Lamellenpaket, um in diesem Betriebszustand ohne oder mit nur geringer dynamischer Förderung von Kühlöl im Bereich der Lamellenbremse eine ausreichende Ableitung von Wärme aus derselben zu ermöglichen. Als besonders vorteilhaft wird beurteilt, dass diese Lamellenbremse auch bei Stillstand der rotierbaren Lamellen in einer Nachkühlphase aktiv mit Kühlöl versorgbar ist.

Demnach wird in Ausgestaltung des Verfahrens das Kühlöl bei geschlossener oder schlupfender Lamellenbremse von radial außen nach radial innen durch das Lamellenpaket und bei geöffneter Lamellenbremse von radial innen nach radial außen durch und/oder über das Lamellenpaket geleitet.

Die Strömungsrichtung des Kühlöls durch und/oder über das Lamellenpaket der Lamellenbremse wird dabei durch die Betätigung eines Ölzuführmittels eingestellt, welches durch eine hydraulische Druckdifferenz betätigt wird. Diese das Ölzuführmittel betätigende Druckdifferenz kann durch einen im Kühlölstrom erzeugten Differenzdruck erzeugt werden, oder ein statischer hydraulischer Druck eines Druckmittels sein, mit dem auch der Kolben des Bremslamellenaktuators betätigt wird. Zumindest hängt der Druck zur Betätigung des Ölzutührmittels mittelbar von der Höhe des Betätigungsdrucks des Bremstamellenaktuators ab. Bevorzugt wird das Ölzuführmittel dabei durch einen hydraulischen Druck betätigt, mit dem der Kolben des Bremsaktuators in Schließrichtung betätigt wird.

Gemäß einer speziellen Ausgestaltung der Erfindung kann in diesem Zusammenhand vorgesehen sein, dass das Ölzuführmittel durch eine mechanisch umgelenkte Bewegung des Aktuatorkolbens der Lamellenbremse betätigt wird. Dazu ist dieser Kolben unmittelbar oder mittelbar über zumindest ein anderes Bauteil mit dem Ölzuführmittel bzw. ein zugeordneten Ventilmittel verbunden.

Der Druck des Kühlöls und damit der Kühlölstrom kann auch abhängig von der aktuellen thermischen Verlustleistung der Lamellenbremse eingestellt werden. Diese Verlustleistung wird dabei aus der Drehzahl des rotierbaren Bremsenbauteils und dem Kolbendruck des Bremskolbens errechnet.

In einer anderen Ausgestaltung des Verfahrens gemäß der Erfindung ist vorgesehen, dass das Ölzuführmittel durch einen hydraulischen Druck betätigt wird, der unabhängig vom dem Betätigungsdruck für den Kolben der Lamellenbremse in dem bereist genanten hydraulischen Steuerungsgerät für den Bremslamellenaktuator und/oder dem elektro-hydraulischen Getriebesteuerungsgerät erzeugt wird.

In einer letzten Variante kann vorgesehen sein, dass ein als elektromagnetisches Schaltventil ausgebildetes Ölzuführmittel durch einen elektrischen Steuerungsimpuls eines Steuerungsgerätes betätigt wird, und so den Zustrom von Kühlöl von radial außen nach radial innen oder den Kühlölabfluss von radial innen nach radial außen durch das Lamellenpaket der Lamellenbremse ermöglicht.

Zur Verdeutlichung der Erfindung ist der Beschreibung eine Zeichnung mit Ausführungsbeispielen beigefügt.
In dieser zeigt
- Fig. 1: einen schematischen Längsschnitt durch ein Automatgetriebe mit einer erfindungsgemäßen Lamellenbremse mit einer radial wechselweiser Kühlölführung durch ein radial ausfahrbares Kühlölzuführmittel,
- Fig. 2: die Lamellenbremse gemäß Fig. 1 in einer Ausschnittsvergrö- ßerung im Schlupfbetrieb oder im geschlossenen Zustand mit einer Kühlöldurchströmung von radial außen nach radial innen,
- Fig. 3: einen Querschnitt durch den Außenlamellenträger der Lammel- lenbremse im Bereich der Mitnahmeverzahnung,
- Fig. 4: die Lamellenbremse gemäß Fig. 1 in geöffnetem Zustand mit einer Kühlöldurchströmung von radial innen nach radial außen,
- Fig. 5: eine Lamellenbremse gemäß der Erfindung mit einem Steue- rungsventil als Kühlölzuführmittel im Schlupfbetrieb oder im ge- schlossenen Zustand mit einer Kühlöldurchströmung von radial außen nach radial innen,
- Fig. 6: die Lamellenbremse gemäß Fig. 5 in geöffnetem Zustand mit einer Kühlöldurchströmung von radial innen nach radial außen,
- Fig. 7: die Lamellenbremse gemäß Fig. 5 im Schlupfbetrieb oder im geschlossenen Zustand mit einer Kühlöldurchströmung von ra- dial außen nach radial innen, sowie mit Abführung des Kühlöls axial und radial vorbei an der Lamellenbremse,
- Fig. 8: eine Lamellenbremse im Schlupfbetrieb oder im geschlossenen Zustand mit einer Kühlöldurchströmung von radial außen nach radial innen, sowie einem Schaltventil als Kühlölzuführmittel, welches von einem separaten Steuerdruck zur Ventilbetätigung ansteuerbar ist,
- Fig. 9: einen Längsschnitt durch ein weiteres hydraulisches Steue- rungsventil, mit dem Kühlöl in zwei radial entgegengesetzten Richtungen durch die Lamellenbremse leitbar ist,
- Fig. 10: das hydraulische Steuerungsventil gemäß Fig. 9 in einer Be- triebssituation, in der Kühlöl von radial innen nach radial außen geführt wird,
- Fig. 11: einen detaillierten Längsschnitt durch das Zylindergehäuse des hydraulisches Steuerungsventil gemäß den Figuren 9 und 10, sowie
- Fig. 12: ein Querschnitt durch das Zylindergehäuse in einer Schnitt- ebene AA gemäß Fig. 11 .

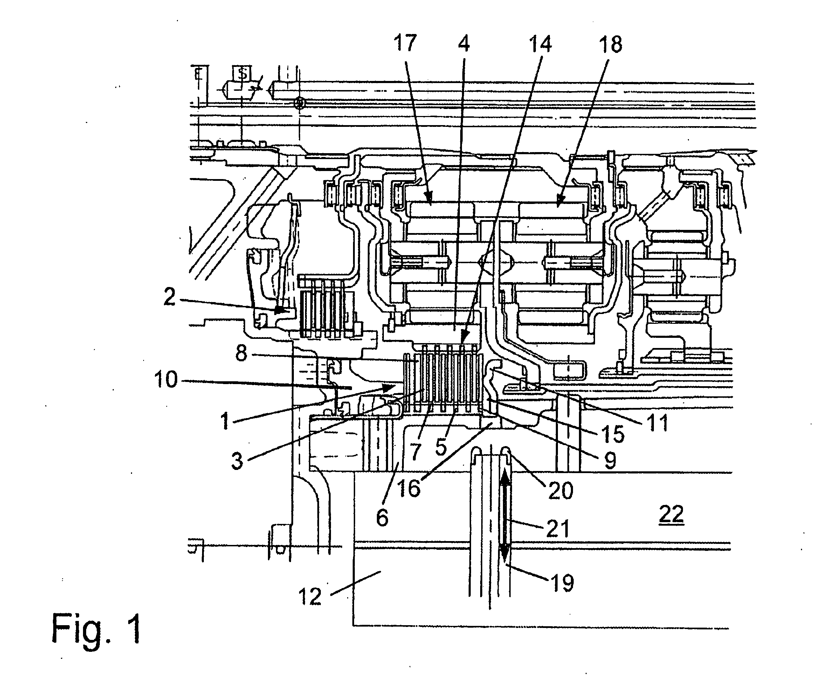

Demnach zeigt Fig. 1 eine Lamellenbremse 1 gemäß einer ersten Ausführungsform der Erfindung. Diese Lamellenbremse 1 ist als Schaltglied eines ausschnittweise dargestellten Automatgetriebes ausgebildet und umfasst zunächst in an sich bekannter Weise einen Innenlamellen 3 tragenden Innenlamellenträger 4, der mit einem drehbaren Bauteil des Automatgetriebes verbunden ist. Außerdem umfasst die Lamellenbremse 1 einen Außenlamellen 5 tragenden Außenlamellenträger 6, der mit dem Gehäuse 12 des Automatgetriebes drehfest verbunden ist. Die Innenlamellen 3 und die Außenlamellen 5 sind wechselweise axial nebeneinander angeordnet und bilden zusammen mit zwei Endlamellen 8 und 9 und einer Stützlamelle 11 ein Lamellenpaket 14. Die eine Endlamelle 8 ist von einem Kolben 10 einer druckmittelbetätigbaren Kolben-Zylinder-Anordnung mit einer die Lamellenbremse 1 schließenden Betätigungskraft axial beaufschlagbar, während die gegenüberliegende Stützlamelle 11 fest mit dem Außenlamellenträger 6 verbunden ist und ein axiales Widerlager für das gesamte Lamellenpaket 14 bildet.

Die Innenlamellen 3 sind vorliegend beidseitig mit einem Reibbelag 7 ausgestattet, während die Außenlamellen 5 ohne Reibbelag sind. Ebenfalls ohne Reibbelag sind die kolbenseitige Endlamelle 8 und die Stützlamelle 11.

In einer anderen Ausgestaltung sind die Innenlamellen 3 und die Außenlamellen 5 jeweils mit einem Reibbelag 7 ausgestattet, wobei die Reibbelägejeweils in die gleiche axiale Richtung weisend angeordnet sind.

Zudem ist erkennbar, dass in der gleichen Querschnittsebene des Automatgetriebes, in der die Lamellenbremse 1 angeordnet ist, sich radial innen ein erster Radsatz 17 und rechts daneben ein zweiter Radsatz 18 des automatgetriebe befindet. Axial links vom ersten Radsatz 17 und von der Lamellenbremse 1 ist eine konventionelle Lamellenbremse 2 angeordnet.

Die in Fig. 1 dargestellte erfindungsgemäße Lamellenbremse 1 befindet sich im geöffneten Ruhezustand bei nicht im Betrieb befindlichem Automatgetriebe. Zur Kühlung der Lamellenbremse 1 mit einem Kühlöl bzw. Schmieröl werden im Betrieb des Automatgetriebes an dieser zwei radial entgegengesetzte Strömungsrichtungen genutzt, wobei der Kühlölstrom bei schlupfend betriebener oder geschlossener Lamellenbremse 1 von radial außen nach radial innen, also in Richtung zur Getriebelängsachse, geführt wird. Bei geöffneter Lamellenbremse fließt der Kühlölstrom dagegen von radial innen nach radial außen. Dabei unterliegt das Kühlöl bei seiner Bewegung von radial innen nach radial außen der Schwerkraft und einem dynamischen Druck, der diesem durch die rotierenden Getriebebauteile aufgeprägt wird, während die Kühlölbewegung von radial außen nach radial innen durch einen statischen Kühlöldruck mit Druckgefälle nach radial innen bewirkt wird.

Die Lamellenbremse 1 ist axial weitgehend gegen einen Austritt von Kühlöl abgedichtet, worauf weiter unten noch genauer eingegangen wird. Zudem ist an der Lamellenbremse 1 gemäß Fig. 1 eine gesondertes Kühlölzuführmittel in Form eines radial bewegbaren Zuführrohres 19 angeordnet, dessen Beweglichkeit durch den Pfeil 21 angedeutet ist. Das Zuführrohr 19 kann in ein hydraulisches Steuergerät 22 integriert sein, jedoch auch in einem separaten Gehäuse oder im Getriebegehäuse 12 radialbeweglich aufgenommen sein.

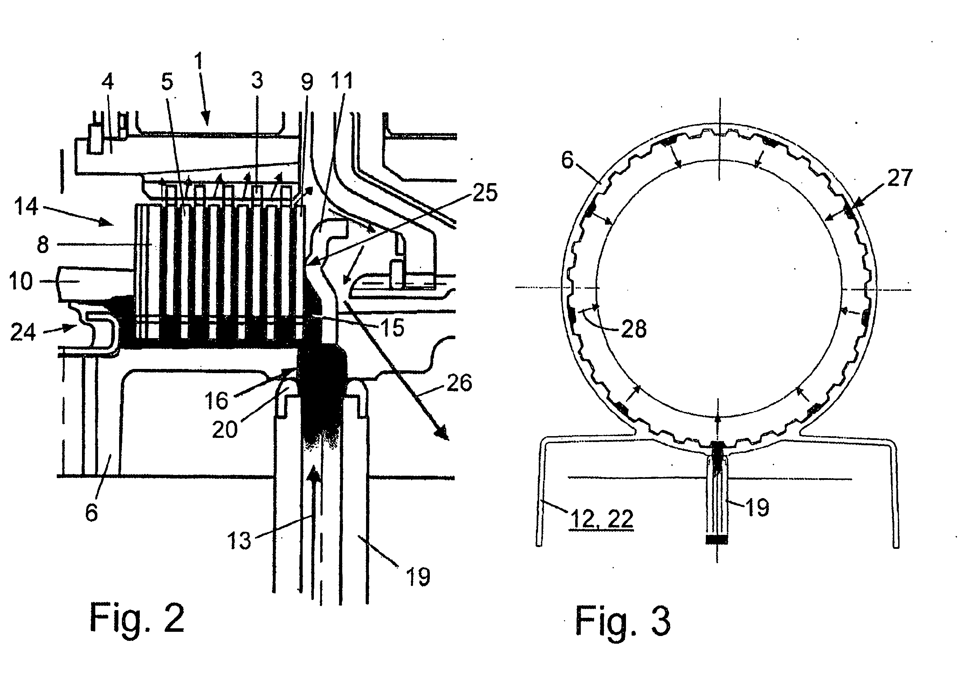

Wie Fig. 1 in einer Zusammenschau mit Fig. 2 zeigt, bewegt sich das Zuführrohr 19 bei einer Beaufschlagung des Zuführrohres 19 mit unter einem statischen Druck stehenden Kühlöl 13 aus der in Fig. 1 dargestellten Ruheposition radial in Richtung zu dem Außenlamellenträger 6, bis dieses, wie in Fig. 2 gezeigt, mit einer an seinem innenlamellenträgernahen Ende angeordneten Dichtung 20 an der radialen Außenseite des Außenlamellenträgers 6 zur Anlage kommt. Bei einem Schlupfbetrieb oder bei geschlossener Lamellenbremse 1 wird dann Kühlöl 13 von radial außen nach innen durch die Lamellenbremse 1 befördert.

Dabei strömt das in Fig. 2 und weiteren Figuren flächenhaft schwarz dargestellte Kühlöl 13 zunächst von einer Druckquelle durch eine zentrale Bohrung des Zuführrohres 19 an der genannten Dichtung 20 vorbei durch eine Öffnung 16 im Außenlamel lenträger 6 zu einem Ringraum 15, der im Ausführungsbeispiel gemäß Fig. 2 zwischen der kolbennahen Seite der Stützlamelle 11 und der kolbenfernen Seite der der Endlamelle 9 ausgebildet ist. Dabei liegt die Endlamelle 9 axial dichtend an der Stützlamelle 11 an, welches durch ein gesondertes Dichtmittel oder auch ohne ein solches durch rein metallischen Kontakt realisiert kann. Axial gegenüber liegend ist das Lamellenpaket 14 durch eine gesonderte Dichtung 24 und/oder durch die Anpressung des Kolbens 10 an die kolbennahe Endlamelle 8 gegen einen axialen Kühlölaustritt weitgehend abgedichtet.

Die Endlamelle 8 kann sowohl als ebene Lamelle oder als Federlamelle (Wellfeder) ausgebildet sein. Bei einer Ausführung der Endlamelle als Federlamelle ist diese bezüglich ihrer Steifigkeit so ausgelegt, dass sie bei geschlossener oder schlupfend betriebener Lamellenbremse plan bzw. annähernd eben gedrückt ist. Es ist jedoch auch eine Bauform möglich, bei der keine Endlamelle 8 vorhanden ist, so dass der Kolben 10 direkt auf die letzte kolbennahe Außenlamelle 5 drückt.

Wegen der axialen Abdichtung des Lamellenpaketes 14 der Lamellenbremse 1 kann das radial von außen zugeführte Kühlöl 13 nur noch durch Zahnlücken 27 am Umfang des Außenlamellenträgers 6 axial in das Lamellenpaket 14 vordringen, und anschließend durch hier nicht gesondert dargestellte Radialnuten in den Reibbelägen 7 der Innenlammellen 3 und/oder der Außenlamellen 5 durch das Lamellenpaket 14 radial nach innen in Richtung zum Innenlamellenträger 4 strömen, wo dieses die Lamellen 3, 5 über Radialbohrungen im Innenlamellenträger 4 verlässt. Dies ist durch die kurzen Pfeile 28 unter anderem in Fig. 3 angedeutet.

Von dem Innenlamellenträger 4 gelangt das in der Lamellenbremse 1 während des Schlupfbetriebes oder bei einem Nachkühlvorgang der geschlossenen Lamellenbremse 1 erwärmte Kühlöl 13 durch Schwerkraftwirkung an dem Lamellenpaket 14 vorbei mit einer gesonderten Kühlölströmung 26 in Richtung eines Kühlölsumpfes, von der das Kühlöl 13 mittels einer Pumpe und über einen Kühler erneut zu dem Zuführrohr 19 bzw. dem Lamellenpaket 14 gefördert werden kann.

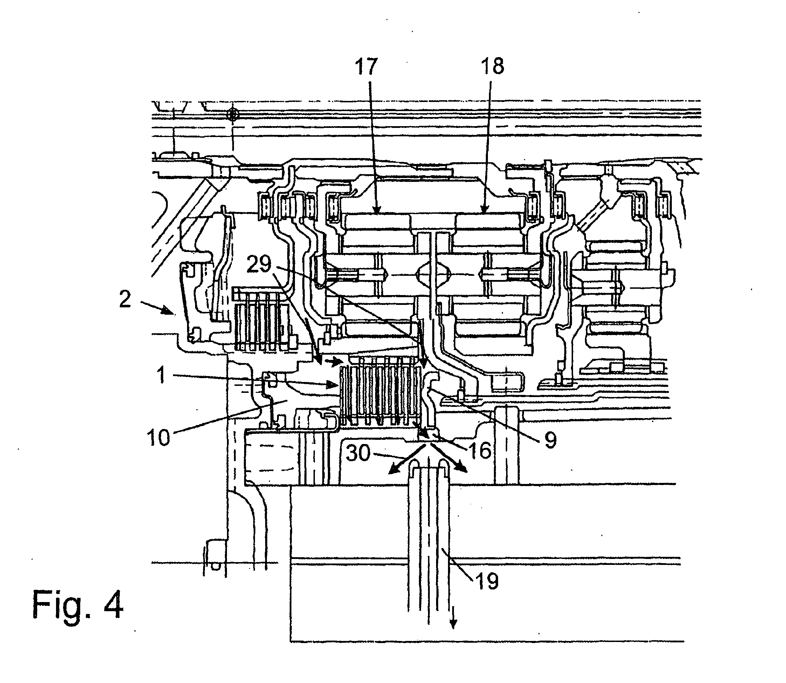

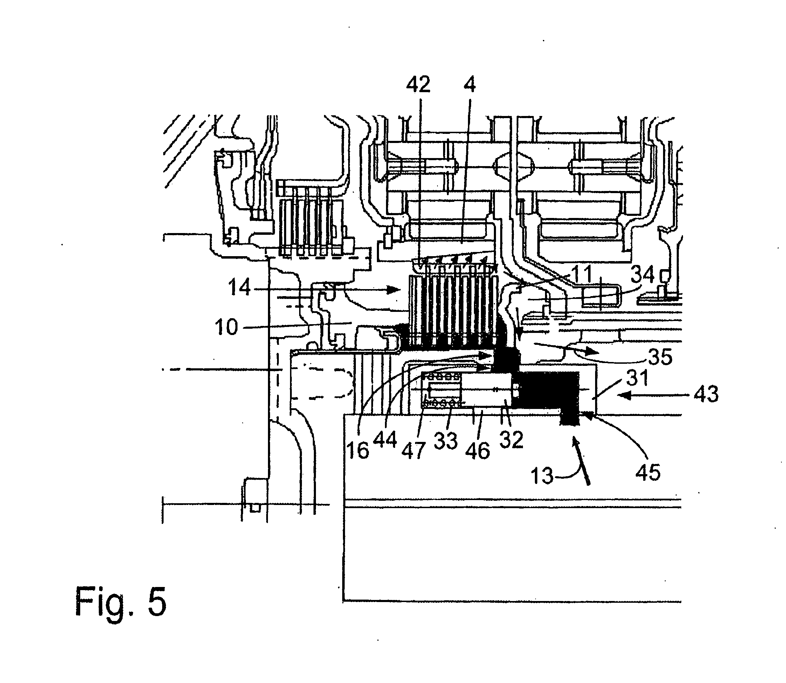

In Fig. 4 ist eine Betriebsweise des Automatgetriebes dargestellt, bei der die Lamellenbremse 1 geöffnet und das Zuführrohr 19 radial in seine Ruhestellung eingefahren ist. In dieser Situation gelangt Kühlöl 29 von der konventionell gekühlten Lamellenbremse 2 und den Zahnrädern der beiden radial innen im Getriebegehäuse 12 angeordneten Radsätze 17 und 18 durch Spritzwirkung und durch Schwerkrafteinfluss zu der erfindungsgemäßen Lamellenbremse 1. Da das Lamellenpaket 14 wie oben ausgeführt axial weitgehend abgedichtet ist, strömt das Kühlöl in dieser Betriebssituation radial von innen nach radial außen durch die Radialnuten der Reibbeläge 7 der Innenlamellen 3 und/oder der Außenlamellen 5 der geöffneten Lamellenbremse 1. Das Kühlöl 13 gelangt dabei in den genannten Ringraum 16 am hier kolbenfernen Ende des Lamellenpaketes 14, von wo es durch die radiale Öffnung 16 durch den Außenlamellenträger 6 hindurchströmen kann. Da sich das Zuführrohr 19 in dieser Situation in seiner Ruheposition fern vom Außenlamellenträger 6 befindet, fließt das Kühlöl dann mit Ölströmen 30 zu dem genannten Kühlölsumpf ab. Ein kleiner Volumenstrom des Kühlöls passiert die Stützlamelle 11 an ihrer kolbenfernen Seite, und gelangt von dort zu dem Kühlölsumpf. Dies ist auch in Fig. 5 gezeigt.

In Fig. 5 ist das Ölzuführmittel an der erfindungsgemäßen Lamellenbremse 1 als ein hydraulisches Schaltventil 43 ausgebildet. Dieses ermöglicht in Abhängigkeit von seiner Ansteuerung bzw. von der aktuellen Betriebssituation der Lamellenbremse 1 bzw. des Automatgetriebes einen Kühlölstrom in entgegen gesetzten radialen Richtungen durch das Lamellenpaket 14 bzw. um dieses herum.

Das Schaltventil 43 gemäß Fig. 5 weist ein Gehäuse 31 auf, in dessen Innenraum ein Kolben 32 axialverschiebbar angeordnet ist. Der Kolben 32 wird an einer Stirnseite von einer Feder 33 mit einer Federkraft beaufschlagt, während die axial gegenüberliegende Stirnseite mit dem Kühlöl in Kotakt ist. Zur Kühlung der Lamellenbremse 1 während des Schlupfbetriebs oder im geschlossenen Zustand derselben wird Kühlöl 13 unter einem ausreichend hohen statischen Druck dem Schaltventil 43 über eine Zulaufbohrung 45 im Ventilgehäuse 31 zugeführt, so dass der Kolben 32 des Schaltventils 43 in Fig. 5 nach links gegen die Rückstellkraft der Feder 33 verschoben wird und dabei eine Übergabebohrung 44 im Ventilgehäuse 31 freigibt. Diese Übergabebohrung 44 ist in Strömungsverbindung mit der bereits genannten Öffnung 16 im Außenlamellenträger 6, so dass durch diese das geschaltete Kühlöl 13 in den Ringraum 15 an dem Lamellenpaket 14 gelangt. Von dort strömt es, sich erwärmend, von radial innen nach radial außen durch das Lamellenpaket 14. Nach dem Verlassen der radialen Öffnungen 42 im Innenlamellenträger 4 gelangt das Kühlöl im Getriebegehäuse an der Stützlamelle 11 vorbei in einen benachbarten Rücklaufraum 34 hinein, und von dort in einem Ölstrom 35 radial von innen nach außen zu dem Kühlölsumpf.

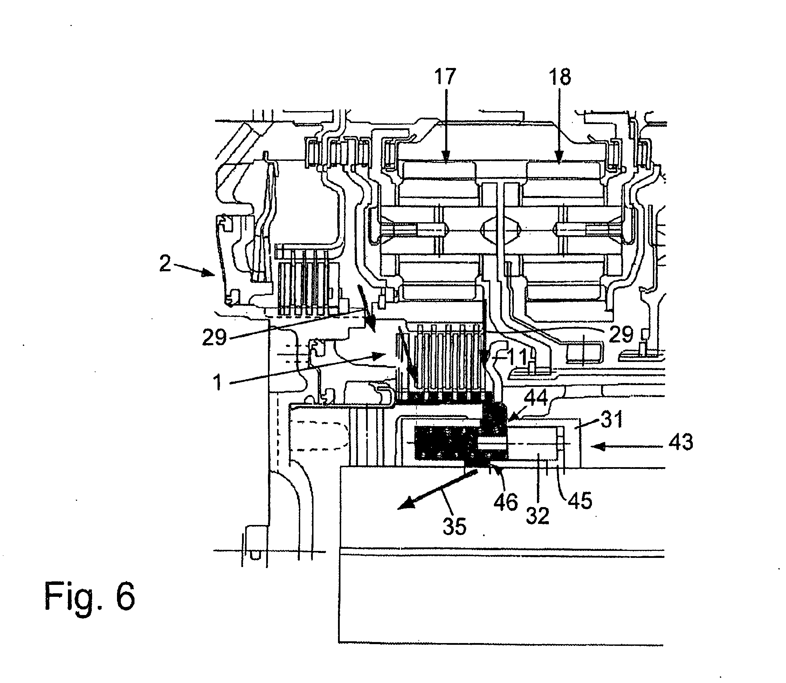

Fig. 6 zeigt diejenige Betriebssituation, in der die Lamellenbremse 1 geöffnet ist, und bei der Kühlöl in Kühlölströmen 29 von der konventionellen Lamellenbremse 2 und den beiden Radsätzen 17 und 18 im Getriebegehäuse von radial innen nach radial außen in Richtung zur erfindungsgemäßen Lamellenbremse 1 strömt. In dieser Situation wird dem Schaltventil 43 kein Kühlöl zur Zulaufbohrung 45 zugeführt, so dass der Ventilkolben 32 durch die Kraft der Feder 33 in der Abbildung nach rechts verschoben ist. Dadurch sind die Übergabebohrung 44 sowie die Ablaufbohrung 46 im Ventilgehäuse 31 geöffnet, so dass das Kühlöl durch das Lamellenpaket 14 der Lamellenbremse 1, die Übergabebohrung 44 und die Ablaufbohrung 46 durch das Schaltventil 43 in einem Kühlölstrom 35 zum Kühlölsumpf abfließen kann.

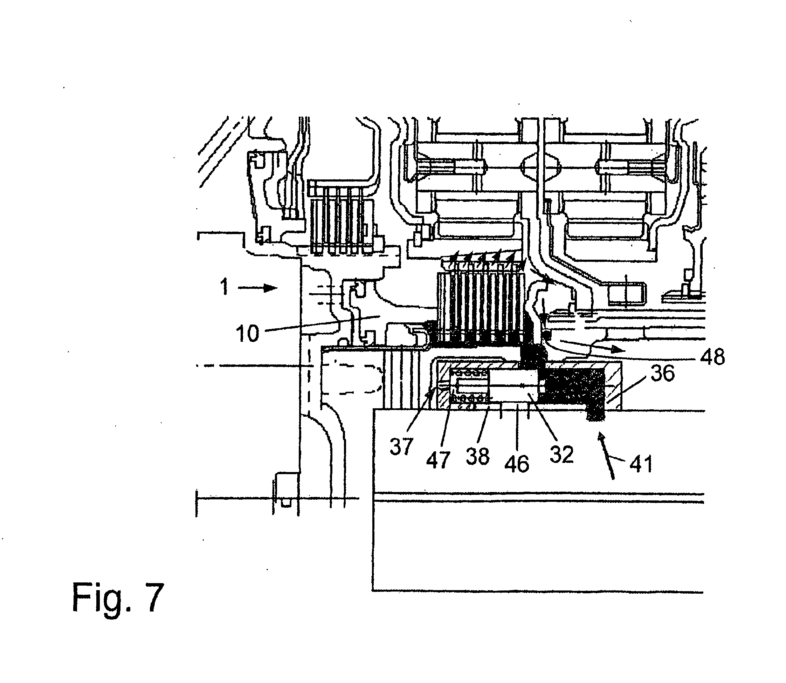

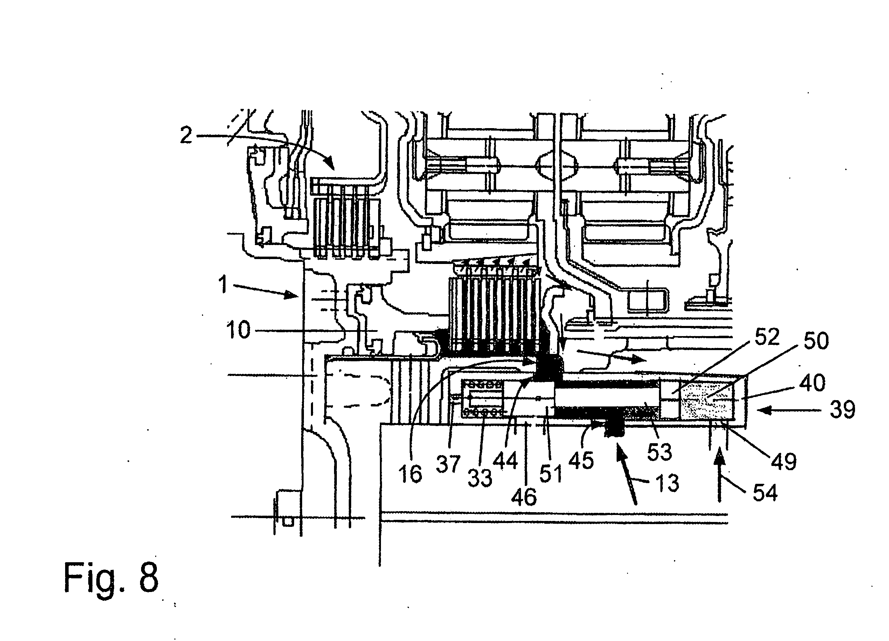

Bei der Ausführungsform der Lamellenbremse 1 gemäß den Figuren 7 und 8 ist das Ventilgehäuse 36 bzw. 40 als separates Ventilgehäuse ausgebildet oder einstückiger Bestandteil des Getriebegehäuses. Bei einstückiger Bauweise von Ventilgehäuse und Getriebegehäuse ist die Ventilachse bevorzugt quer zur Getriebehauptachse ausgerichtet, wodurch die Bearbeitung bei der Getriebeherstellung in einer Transferstrasse erleichtert wird. Sofern das Ventilgehäuse 36 bzw. 40 separat ausgebildet ist, wird eine Anordnung desselben parallel zur Getriebehauptachse bevorzugt.

Fig. 7 verdeutlicht zudem, dass das Ventilgehäuse 36 eine axiale Entlüftungsbohrung 37 aufweisen kann, mittels welcher der Federraum 47 im Schaltventil 36 bei einer Axialverschiebung des Ventilkolbens 32 entlüftet oder belüftet werden kann. Dem gleichen Zweck dient ein radial außen im Ventilgehäuse 36 ausgebildeter Entlüftungs- bzw. Belüftungsschlitz 38. Alternativ dazu kann auch die Ablaufbohrung 46 im Schaltventilgehäuse 40 axial derart lang gestreckt ausgebildet sein, dass diese auch die genannte Be- und Entlüftungsfunktion für den Federraum 47 wahrnehmen kann.

Fig. 7 zeigt außerdem, dass im Bereich der kolbenfernen Seite der Stützlamelle 11 ein Elastomerelement 48 als Dichtung in eine Ringnut in einem gehäusefesten Bauteil eingesetzt ist, mittels dem die Lamellenbremse axial abdichtbar ist.

Das Schaltventil 39 an der erfindungsgemäßen Lamellenbremse 1 gemäß Fig. 8 unterscheidet sich von dem Schaltventil 43 der vorigen Figuren dadurch, dass dieses nicht durch das unter einen statischen Druck gesetzte Kühlöl 13 betätigt wird, sondern dass zur Ventilbetätigung ein gesonderter Schaltventil-Steuerdruck 54 verwendet wird. Dieser Steuerdruck 54 ist bevorzugt unmittelbar oder zumindest mittelbar abhängig von demjenigen Steuerdruck, mit dem der Kolben 10 des hydraulischen Bremslamellenaktuators angesteuert bzw. betätigt wird.

Das Schaltventil 39 gemäß der in Fig. 8 gezeigten Variante ist bevorzugt Bestandteil eines elektro-hydraulischen Getriebesteuergerätes. Es ist in diesem Ausführungsbeispiel einerseits an der radial innen liegenden Seite des Getriebesteuerungsgerätes angeordnet und steht andererseits mit der radial nach außen weisenden Seite des Außenlamellenträgers 6 in Strömungskontakt. Das Ventilgehäuse 40 weist eine Steuerdruckbohrung 49 zur Zuführung des Steuerdruckmittels 54 unter Steuerdruck auf, das so in einen Steuerdruckraum 50 gelangt. Zudem verfügt das Ventilgehäuse 40 über eine Zulaufbohrung 45, eine Ablaufbohrung 46 und eine Übergabebohrung 44 für das Kühlöl 13. Außerdem ist in dem Ventilgehäuse 40 ein erster, die Übergabebohrung 44 öffnender oder schließender Steuerkolben 51, und ein von dem Steuerdruckmittel 54 druckbeaufschlagbarer zweiten Steuerkolben 52 angeordnet, wobei die beiden Kolben 51, 52 über eine Kolbenstange 53 axial miteinander verbunden und von einer Feder 33 mit einer Axialkraft beaufschlagbar sind.

Bei einem ausreichend hohen Steuerdruck wird der Kolben 52 und der mit diesem verbundene Kolben 51 in Fig. 8 gegen die Rückstellkraft der Feder 33 nach links verschoben, so dass der Kolben 51 die Übergabebohrung 44 zu der Öffnung 16 im Außenlamellenträger 6 freigibt. Dadurch kann das unter einem statischen Druck zugeführte Kühlöl 13 von der Zulaufbohrung 45 über das Schaltventil 39 zu dem Lamellenpaket 14 der Lamellenbremse 1 gelangen und diese von radial außen nach radial innen durchströmen.

Sobald der Druck des Steuerdruckmittels 54 unter einen vorbestimmten Wert abfällt, drückt die Feder 33 den Tandemkolben 51, 52, 53 in Fig. 8 axial nach rechts, so dass die Zulaufbohrung 45 verschlossen und die Ablaufbohrung 46 im Ventilgehäuse 40 des Schaltventils 43 geöffnet wird. Dadurch kann bei geöffneter Lamellenbremse 1 Kühlöl 13 von der anderen, radial inneren Lamellenbremse 2 beziehungsweise den beiden Radsätzen 17 und 18 von radial innen nach radial außen durch das Lamellenpaket 14 und das Schaltventil 39 zu dem Kühlölsumpf geleitet werden. Ein anderer Kühlölstrom kann, wie schon weiter oben eingehend beschrieben wurde, an dem Lamellenpaket 14 vorbei im Getriebegehäuse von radial innen nach radial außen zum Kühlölsumpf geführt werden.

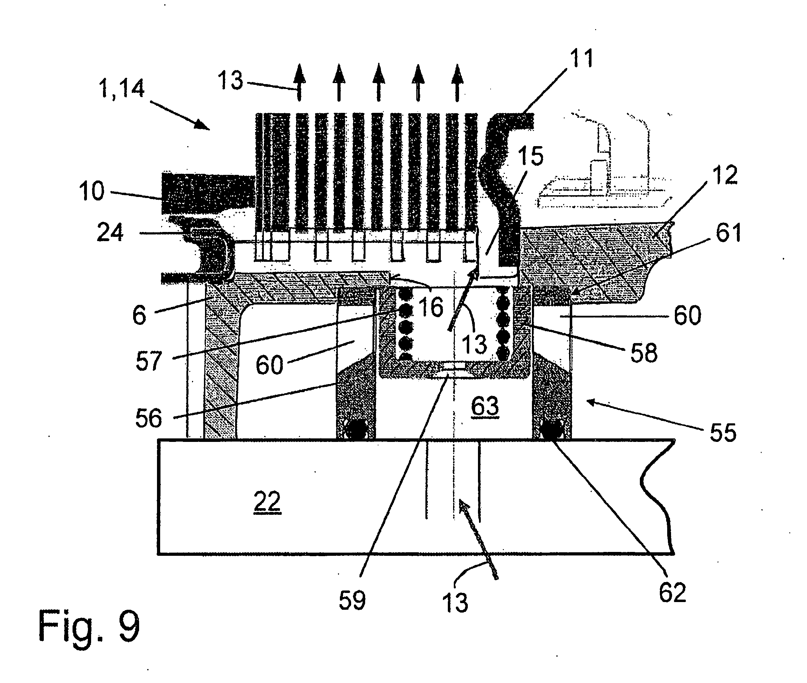

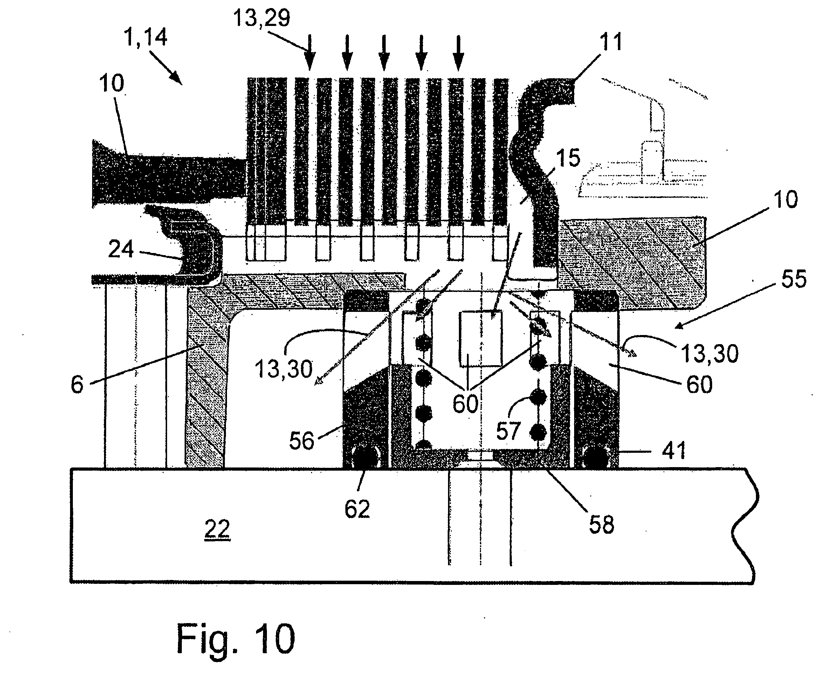

In den Figuren 9 und 10 ist eine Lamellenbremse 1 mit einem hydraulischen Schaltventil 55 gemäß einer weiteren Variante dargestellt. Diese Lamellenbremse weist wie bereits eingehend beschrieben Innenlamellen und Außenlamellen auf, die zusammen mit End- und Stützlamellen 8,11 ein Lamellenpaket 14 bilden. Dieses Lamellenpaket 14 ist gegen einen axialen Kühlölaustritt weitgehend abgedichtet und von dem Kolben 10 des nicht weiter dargestellten Bremsaktuators mit einer die Lamellenbremse 1 schließenden Betätigungskraft beaufschlagbar.

Wie bei den weiter oben erläuterten Ausführungsbeispielen der Erfindung soll auch bei dieser Lamellenbremse 1 das Kühlöl 13 in Abhängigkeit von unterschiedlichen Betriebssituationen derselben diese im Wesentlichen von radial innen nach radial außen oder von radial außen nach radial innen durchströmen. Eine Durchströmung der Lamellenbremse von radial innen nach radial außen, also aus Richtung vom Getriebezentrum hin zu seinem radialen Rand, soll dann erfolgen, wenn die Lamellenbremse geöffnet ist. Bei schlupfend betriebener Lamellenbremse oder bei geschlossener Lamellenbremse, zum Nachkühlen derselben, soll dagegen Kühlöl von radial außen nach radial innen durch das Lamellenpaket 14 geführt werden.

Um diese Kühlfunktionen realisieren zu können, verfügt die Lamellenbremse gemäß den Figuren 9 und 10 über ein hydraulisches Schaltventil 55, mit einem hohlzylindrischen Gehäuse 56, welches radial unterhalb der Öffnung 16 im Außenlamellenträger 6 derartig an diesem bzw. an der radialen Außenseite des Getriebegehäuses 12 befestigt ist, dass die innere Mantelfläche des Ventilgehäuses 56 diese Öffnung 16 abdichtend umgreift.

Bevorzugt ist in diesem Zusammenhang vorgesehen, dass das hohlzylindrische Gehäuse 56 des hydraulischen Schaltventils 55 mit seinem einen axialen Ende in eine radiale Ausnehmung 61 in dem Getriebegehäuse 12 abdichtend eingesetzt ist, und mit seinem anderen Ende auf dem Gehäuse des hydraulischen Getriebesteuergerätes 22 angeordnet bzw. befestigt ist.

In dem hohlzylindrische Gehäuse 56 des hydraulischen Schaltventils 55 ist ein im Längsschnitt topfförmiger Kolben 58 axial verschiebbar aufgenommen, der im Kolbenboden eine Bodenbohrung 59 aufweist, durch die Kühlöl 13 leitbar ist. Der topfförmige Kolben 58 ist zudem derartig in dem hohlzylindrischen Gehäuse 56 eingesetzt, dass dessen Kolbenboden fern von dem Innenlamellenträger 6 angeordnet ist.

Bevorzugt ist in dem topfförmigen Kolben 58 eine Feder 57 eingesetzt, die hier als Spiraldruckfeder ausgebildet ist. Diese Feder 57 stützt sich einenends am Topfboden des Kolbens 58 und anderenends an der radialen Außenseite des Außenlamellenträgers 6 beziehungsweise des Getriebegehäuses 12 ab

In dem Gehäuse 56 sind seitliche Öffnungen 60 ausgebildet, die in Abhängigkeit von der Verschiebeposition des Kolbens 58 durch diesen geöffnet oder verschlossen werden können, so dass wechselweise ein Durchtritt von Kühlöl 13 ermöglicht oder versperrt wird.

Zur weiteren Abdichtung des im hohlzylindrischen Gehäuse 56 gebildeten Zylinderraumes 63 ist ein Dichtmittel 62 in einer innenlamellenträgerfernen stirnseitigen Ringnut 41 des Gehäuses 56 eingesetzt, so dass kein Kühlöl 13 zwischen dem Gehäuse 56 des hydraulischen Schaltventils 55 und dem Gehäuse des hydraulischen Getriebesteuergerätes 22 axial entweichen kann. Zudem kann dieses beispielsweise als O-Ring ausgebildete Dichtmittel 62 zum Tolleranzausgleich beim Einbau des hydraulischen Steuerungsventils 55 zwischen dem Getriebegehäuse 12 und dem Steuerungsgerät 22 dienen.

Nachfolgend wird die Arbeitsweise dieses hydraulischen Schaltventils 55 beschrieben.

Fig. 9 zeigt eine Betriebssituation, in der die Lamellenbremse 1 im Schlupf betrieben wird oder vollständig geschlossen ist. Um diese ausreichend zu kühlen beziehungsweise nachzukühlen wird dem hydraulischen Schaltventil 55 beispielsweise von dem hydraulischen Steuerungsgerät 22 Kühlöl 13 von radial außen nach radial innen zugeführt. Dieses Kühlöl 13 gelangt daher zunächst in den Zylinderraum 63. Da das Kühlöl 13 unter einem statischen Druck zugeführt wird, wird der topfförmige Kolben 58 gegen die Rückstellkraft der Feder 57 in Richtung zu dem Lamellenpaket 14 verschoben. Dadurch verschließt der Kolben 58 die seitlichen Öffnungen 60 in dem hohlzylindischen Ventilgehäuse 56.

Von dem Zylinderraum 63 gelangt das Kühlöl 13 durch die Bohrung 59 im Boden des Kolbens 58 in dessen zylindrischen Hohlraum. Vor dort fließt das Kühlöl 13 unter Druck in den Ringraum 15 im Bereich der Stützlamelle 11, über den das Kühlöl 13, wie weiter oben schon beschrieben wurde, zu dem Lamellen des Lamellenpaketes 14 geleitet wird. Nach dem Durchtritt des Kühlöls 13 durch das Lamellenpaket 14 gelangt dieses über benachbarte Getriebebereiche zu dem bereits erwähnten Kühlölsumpf.

Fig. 10 veranschaulicht diejenige Betriebssituation, in der die Lamellenbremse 1 geöffnet ist sowie eine Differenzdrehzahl zwischen dem drehbaren und dem feststehenden Lamellenbremsenbauteil vorliegt. In dieser Betriebssituation soll Kühlöl 13 über einen Kühlölstrom 29 von radial innen nach radial außen durch dass Lamellenpaket 14 geleitet werden. Ermöglicht wird dies dadurch, dass dem hydraulischen Schaltventil 55 bei geöffneter Lamellenbremse 1 kein Kühlöl 13 unter statischem Druck von radial außen nach radial innen zugeführt wird. Daher befindet sich der hier topfförmig ausgebildete zugeführt wird. Daher befindet sich der hier topfförmig ausgebildete Kolben 58 innerhalb des Ventilgehäuses 56 in seiner nicht ausgelenkten Ruhelage, in der er durch die Kraft der Feder 57 gehalten wird. Dadurch sind die seitlichen Öffnungen 60 in dem Ventilgehäuses 56 freigegeben, so dass Kühlöl 13 von den durchströmten Bremslamellen kommend in Kühlölströmen 30 zunächst in das Ventilgehäuses 56 eintreten und dann durch die seitlichen Öffnungen 60 in Richtung zum Kühlölsumpf austreten kann.

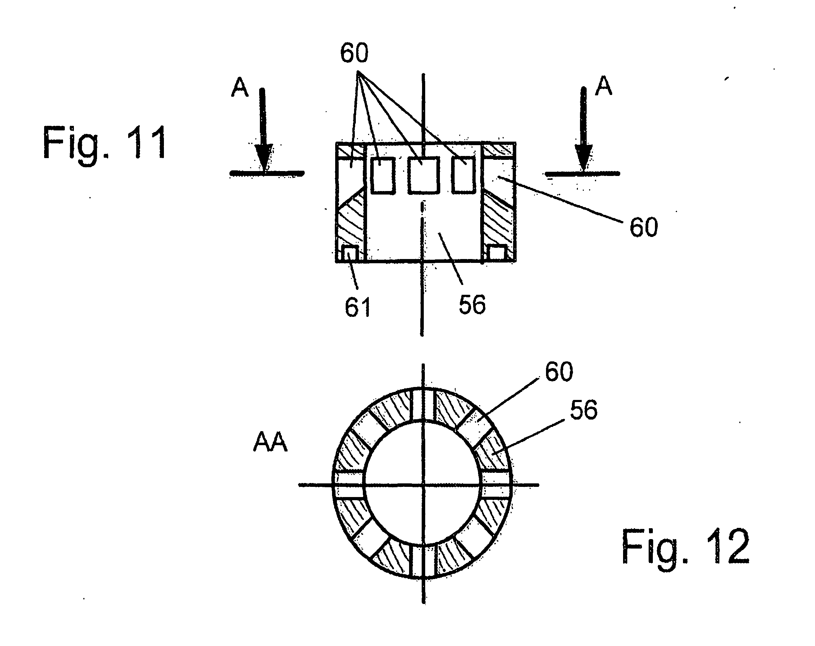

Zur weiteren Erläuterung einer bevorzugten Bauweise des hohlzylindrischen Ventilgehäuses 56 ist in Figur 11 ein detaillierter Längsschnitt sowie in Fig. 12 ein Querschnitt in der Schnittebene AA des Ventilgehäuses 56 gemäß Fig. 11 gezeigt. Deutlich erkennbar ist, dass die seitlichen Öffnungen 60 umfangsverteilt in dem Ventilgehäuse 56 ausgebildet sind, so dass zur Vermeidung von Schleppmomentverlusten bei geöffneter Lamellenbremse 1 ein gutes und schnelles Abfließen von Kühlöl 13 aus dem Bereich derselben gewährleistet ist.

Da die beschriebene Lamellenbremse mit der erfindungsgemäßen Zwangskühlung auch bei geschlossenen oder schlupfenden Betrieb sehr leistungsstark ist, kann diese neben den zuvor beschrieben Anwendungen auch für die Kühlung einer reinen Anfahrbremse verwendet werden. Ein weiteres Anfahrelement im Getriebe, wie beispielsweise ein hydrodynamischer Drehmomentwandler, ist dann entbehrlich,

Schließlich sei erwähnt, dass eine erfindungsgemäße Lamellenbremse in einem Hybrid-Getriebe ebenfalls als Schaltelement verwendbar ist.

### Bezugszeichen

1 Lamellenbremse
2 Lamellenbremse (konventionell)
3 Innenlamelle
4 Innenlamellenträger
5 Außenlamelle
6 Außenlamellenträger
7 Reibbelag
8 Kolbennahe Endlamelle
9 Kolbenferne Endlamelle
10 Kolben
11 Stützlamelle
12 Getriebegehäuse
13 Kühlöl
14 Lamellenpaket
15 Ringraum an Stützlamelle
16 Öffnung im Außenlamellenträger
17 Erster Radsatz
18 Zweiter Radsatz
19 Ölzuführmittel; radial verschiebbares Zuführrohr, Ventil
20 Dichtung am Rohr 19
21 Verstellrichtungen des Rohres 19
22 Hydraulisches Steuerungsgerät
23 Mitnahmeverzahnung
24 Dichtung an Kolben oder kolbenseitiger Endlamelle
25 Dichtung an Stützlamelle
26 Kühlölstrom in Richtung Sumpf
27 Zahnlücke an der Verzahnung des Außenlamellenträgers
28 Radiale nach innen weisende Ölführung
29 Ölstrom von den Radsätzen und der inneren Lamellenbremse 2
30 Ölstrom in Richtung Sumpf
31 Ventilgehäuse
32 Koben des Steuerschieberventils
33 Feder des Steuerschieberventils
34 Rücklaufraum an kolbenferner Seite der Stützlamelle
35 Kühlölstrom zum Sumpf
36 Separates Ventilgehäuse
37 Axiale Entlüftungsbohrung
38 Entlüftungsschlitz
39 Schaltventil (über Steuerdruck betätigbar)
40 Ventilgehäuse
41 Stirnseitige Ringnut im Gehäuse 56
42 Radiale Öffnungen im Innenlamellenträger
43 Schaltventil
44 Übergabebohrung im Schaltventil
45 Zulaufbohrung
46 Ablaufbohrung im Schaltventil
47 Federraum im Schaltventil
48 Elastomerelement, Dichtung
49 Steuerdruckbohrung im Ventilgehäuse 40
50 Steuerdruckraum
51 Steuerkolben
52 Steuerkolben
53 Kolbenstange
54 Steuerdruckmittel
55 Hydraulisches Schaltventil
56 Gehäuse
57 Feder
58 Kolben
59 Bohrung im Kolben 58
60 Öffnungen im Gehäuse
61 Radiale Ausnehmung im Getriebegehäuse
62 Dichtmittel, O-Ring
63 Zylinderraum

## Patentansprüche

1. Lamellenbremse (1) in einem Automatgetriebe, mit einem Innenlamellenträger (4) und einem Außenlamellenträger (6), mit an den Lamellenträgers (4, 6) axial wechselweise angeordneten Innenlamellen (3) und Außenlamellen (5), mit Reibbelägen (7) an den Innen- und/oder Außenlamellen (3, 5), mit einem Kolben (10) einer druckmittelbetätigbaren Kolben-Zylinder-Anordnung, mittels der die Innenlamellen (3) und Außenlamellen (5) mit einer die Lamellenbremse schließenden Kraft beaufschlagbar sind, mit einer kolbenfernen Endlamelle (9) oder Stützlamelle (11), die für das durch die Lamellen (3, 5, 9, 11) aufgebaute Lamellenpaket (14) ein axiales Widerlager bildet, und beider die Lamellenbremse (1) und/oder die sie umgebenden Bauteile so ausgebildet sind, dass die Lamellen (3, 5, 9, 11) mit einem Kühlöl benutzbar sind, **dadurch gekennzeichnet, dass**
die Lamellenbremse (1) derart ausgebildet ist, dass das Kühlöl (13) in Abhängigkeit vom Betriebszustand derselben in radial unterschiedlichen Richtungen über und/oder durch das Lamellenpaket (14) leitbar ist, derart, dass das Kühlöl (13) im geöffneten Zustand der Lamellenbremse (1) von radial innen nach radial außen durch dieselbe leitbar ist und bei geschlossener Lamellenbremse (1) und/oder schlupfender Betriebsweise derselben von radial außen nach radial innen durch dieselbe leitbar ist,
wobei die Lamellenbremse (1) in axialer Richtung weitgehend gegen einen Kühlölaustritt abgedichtet ausgebildet ist, und wobei der Außenfamellenträger (6) im Bereich des Lamellenpaketes (14) wenigstens eine radiale Öffnung (16) aufweist, durch die Kühlöl (13) dem Lamellenpaket (14) bei geschlossener und/oder schlupfender Lamellenbremse (1) zuleitbar ist und durch die Kühlöl (13) bei geöffneter Lamellenbremse (1) von dem Lamellenpaket (14) ableitbar ist.

2. Lamellenbremse nach Anspruch 1, **dadurch gekennzeichnet, dass** die radiale Öffnung (16) im Außenlamellenträger (6) in wenigstens einen Ringraum (15) mündet, der an dem kolbenfernen axialen Ende des Lamellenpaketes (14) zwischen der Endlamelle (9) und der Stützlamelle (11) ausgebildet ist.

3. Lamellenbremse nach Anspruch 1 oder 2, **dadurch gekennzeichnet, dass** die axiale Abdichtung der Lamellenbremse (1) über gesonderte Dichtmittel (24) an dem Kolben (10) und/oder einer kolbenseitigen Endlamelle (8) und/oder einer kolbennahen Innenlamelle (3) bzw. Außenlamelle (5) und/oder der kolbenfernen Endlamelle (9) und/oder an der kolbenfernen Stützlamelle (11) realisiert ist.

4. Lamellenbremse nach Anspruch 1 oder 2, **dadurch gekennzeichnet, dass** die axiale Abdichtung der Lamellenbremse (1) über dichtend ausgebildete metallische Oberflächen an dem Kolben (10) und/oder einer kolbenseitigen Endlamelle (8) und/oder einer kolbennahen Innenlamelle (3) bzw. Außenlamelle (5) und/oder der kolbenfernen Endlamelle (9) und/oder an der kolbenfernen Stütztamelle (11) realisiert ist.

5. Lamellenbremse nach einem der Ansprüche 1 bis 3, **dadurch gekennzeichnet, dass** das Kühlöl (13) durch zumindest teilweise radiale Nuten in dem Reibbelag (7) einer jeden Innenlamelle (3) und/oder Außenlamelle (5) leitbar ist, durch die das Kühlöl (13) von dem einströmseitigen radialen Ende zu dem abströmseitigen radialen Ende der Lamellen (3, 5) des Lamellenpaketes (14) strömen kann.

6. Lamellenbremse nach einem der Ansprüche 1 bis 5, **dadurch gekennzeichnet, dass** der Innenlamellenträger (4) radiale Öffnungen (42) zum Ein- oder Ausströmen von Kühlöl (13) aus dem bzw. in das Lamellenpaket (14) aufweist,
und dass eine Mitnahmeverzahnung (23) an dem Außenlamellenträger (6) zur Weiterleitung des Kühlöls (13) von dem Ringraum (15) zu den Lamellen (3, 5) abschnittweise Zahnlücken (27) im Mitnahmeprofil aufweist.

7. Lamellenbremse nach einem der Ansprüche 1 bis 6, **dadurch gekennzeichnet, dass** bei geschlossener und/oder schlupfender Lamellenbremse (1) das Kühlöl (13) unter statischem Druck durch ein gesondertes Ölzuführmittel (19) zuführbar ist.

8. Lamellenbremse nach Anspruch 7, **dadurch, gekennzeichnet, dass** das Ölzufuhrmittel (19) zur Ölweiterleitung an das radial äußere Ende der Öffnung (16) im Außenlamellenträger (6) diese ringförmig abdichtend heranführbar ist, und nach Beendigung der genannten Betriebsweisen die Öffnung (16) freigebend von dem Außenlamellenträger (6) entfernbar ist.

9. Lamellenbremse nach Anspruch 7 oder 8, **dadurch gekennzeichnet, dass** das Ölzüführmittel (19) als ein radial verschiebbares Zuführrohr ausgebildet ist, welches durch einen statischen Kühlöldruck öder durch einen die Lamellenbremse (1) schließenden oder in den Schlupfbetrieb bringenden Steuerdruck radial verschiebbar ausgebildet ist,
wobei das Zuführrohr an seinem radial dem Außenlamellenträger (6) zugewanten Ende ein Dichtung (20) aufweist oder wobei eine die Öffnung (16) umgreifende Dichtung an der radialen Außenseite des Außenlamellentträgers (6) angeordnet ist.

10. Lamellenbremse nach Anspruch 7, **dadurch gekennzeichnet, dass** das Ölzuführmittel (19) als ein hydraulisches Schaltventil (39, 43, 55) ausgebildet ist.

11. Lamellenbremse nach Anspruch 10, **dadurch gekennzeichnet, dass** das Schaltventil (43) ein Gehäuse (31, 36, 40) aufweist, in dem ein durch eine Feder (33) belasteter Kolben (32) axialverschiebbar angeordnet ist, und bei dem der Kolben (32) eine Übergabebohrung (44) freigeben und verschließen kann, die in Strömungsverbindung mit der Öffnung (16) im Außenlamellenträger (6) ist,
wobei das Gehäuse (31, 36, 40) des Schaltventils (43) eine Zulaufbohrung (45) aufweist, durch die Kühlöl (13) unter Druck einströmen kann,
das Gehäuse (31, 36, 40) des Schaltventils (43) eine Ablaufbohrung (46) aufweist, durch die Kühlöl (13) aus dem Gehäuse (31,36) ableitbar ist
und das Gehäuse (36) des Schaltventils (43) einstückig mit dem Getriebegehäuse oder einstückig mit dem Gehäuse des hydraulischen Steuergerätes (22) oder als separates Gehause ausgebildet ist.

12. Lamellenbremse nach Anspruch 11, **dadurch gekennzeichnet, dass** das Schaltventil (43) hinsichtlich seiner Steuerventilachse parallel quer zur Getriebehauptachse oder parallel zur Getriebehauptachse oder schräg zur Getriebehauptachse ausgerichtet im Getriebe angeordnet ist.

13. Lamellenbremse nach Anspruch 10, 11 oder 12, **dadurch gekennzeichnet, dass** das Schaltventil (39) von einem separaten Steuerdruck schaltbar ausgebildet ist.

14. Lamellenbremse nach Anspruch 13, **dadurch gekennzeichnet, dass** das Schaltventil (39) von demjenigen Steuerdruck betätigbar ist, mit dem auch der Kolben (10) der Lamellenbremse (1) betätigbar ist.

15. Lamellenbremse nach Anspruch 13 oder 14, **dadurch gekennzeichnet, dass** das Schaltventil (39) ein Ventilgehäuse (40) mit einer Steuerdruckbohrung (49) zur Zuführung des Steuerdruckmittels (54), einen Steuerdruckraum (50), eine Zulaufbohrung (45), eine Ablaufbohrung (46) und eine Übergabebohrung (44) für das Kühlöl (13), sowie einen ersten, die Übergabebohrung (44) öffnenden oder schließenden Steuerkolben (51) und einen von dem Steuerdruckmittel (54) beaufschlagbaren zweiten Steuerkolben (52) ausweist, wobei die beiden Steuerkolben (51,52) über eine Kolbenstange (53) axial miteinander verbunden und von einer Feder (33) mit einer Axialkraft beaufschlagbar sind.

16. Lamellenbremse nach einem der Ansprüche 1 bis 10, **dadurch gekenntzeichnet**, das das Schaltventil (55) ein hohlzylindrisches Gehäuse (56) aufweist, welches radial unterhalb der Öffnung (16) im Außenlamellenträger (6) derartig befestigt ist, dass die innere Mantelfläche des Gehäuses (56) die Öffnung (16) umgreift,dass in dem Gehäuse (56) ein Kolben (58) mit einer Bodenbohrung (59) axial verschiebbar aufgenommen ist, und dass in dem Gehäuse (56) seitliche Öffnungen (60) ausgebildet sind, die in Abhängigkeit von der Position des Kolbens (58) durch letzteren geöffnet oder verschlossen werden können.

17. Lamellenbremse nach Anspruch 16,**dadurch gekennzeichnet, dass** das Gehäuse (56) des hydraulischen Schaltventils (55) mit seinem einen axialen Ende in eine radiale Ausnehmung (61) in dem Getriebegehäuse (12) eingesetzt ist, und mit seinem anderen Ende auf dem Gehäuse des hydraulischen Getribesteuergerätes (22) des Getriebes angeordnet ist, wobei ein Dichtmittel (62) zur Abdichtung des Zylinderraumes (63) zwischen dem Gehäuse (56) des hydraulischen Schaltventils (55) und dem Gehäuse des hydraulischen Getriebesteuergerätes (22) vorgesehen ist.

18. Lamellenbremse nach Anspruch 16 oder 17, **dadurch gekennzeichnet, dass** das hydraulische Schaltventil (55) derartig aufgebaut ist, dass bei einer Zuleitung von Kühlöl (13) in den Zylinderraum (63) von radial außen nach radial innen der Kolben (58) in Richtung zum Außenlamellenträger (6) im Gehäuse (56) verschließend verschiebbar ist, und dass bei einer Zuleitung von Kühlöl (13) von radial innen nach radial außen der Kolben (58) in die entgegengesetzte Richtung bewegbar ist, wobei dieser die seitlichen Öffnungen (60) im Gehäuse (56) freigibt.

19. Lamellenbremse nach Anspruch 18, **dadurch gekennzeichnet, dass** die die seitlichen Öffnungen (60) im Gehäuse (56) freigebende Bewegung des Kolbens (58) durch eine Zuleitung von Kühlöl (13) von radial innen nach radial außen zu dem Kolben (58) und/oder durch die Rückstellkraft einer Feder (57) bewirkt wird, welche sich einenends am Kolben (58) und anderenends an der radialen Außenseite des Außenlamellenträgers (6) bzw. des Getriebegehäuses (12) abstützt.

20. Lamellenbremse nach Anspruch 18, **dadurch gekennzeich**n e t,dass die die seitlichen Öffnungen (60) im Gehäuse (56) verschließende Bewegung des Kolbens (58) durch eine Zuleitung von Kühlöl (13) von radial außen nach radial innen in den Zylinderraum (63) des Gehäuses (56) unterhalb des Bodens des Kolbens (58) bewirkt wird.

21. Verfahren zum Betreiben einer Lamellenbremse (1) gemäß einem der vorherigen Ansprüche, **dadurch gekennzeichnet, dass** Kühlöl (13) in Abhängigkeit vom Betriebszustand der Lamellenbremse (1) in radial unterschiedlichen Richtungen durch und/oder über deren Lamellenpaket (14) leitbar ist, wobei die Strömungsrichtung des Kühlöls (13) durch und/oder über das Lamellenpaket (14)durch Betätigung eines Ölzuführmittels (19,39,43) eingestellt wird, derart, dass das Kühlöl (13) bei geschlossener oder schlupfender Lamellenbremse (1) von radial außen nach radial innen durch das Lamellenpaket (14) und bei geöffneter Lamellenbremse (1) von radial innen nach radial außen durch und/oder über das Lamellenpaket (14) geleitet wird.

22. Verfahren nach Anspruch 21, **dadurch gekennzeichnet, dass** das Ölzuführmittel (19,39, 43) durch eine hydraulische Druckdifferenz betätigt wird.

23. Verfahren nach Anspruch 21, **dadurch gekennzeichnet, dass** das Ölzuführmittel (19, 39) durch einen im Kühlölstrom (13) erzeugten Differenzdruck betätigt wird.

24. Verfahren nach Anspruch 21, **dadurch gekennzeichnet, dass** das Ölzuführmittel (19, 39, 43) durch einen hydraulischen Druck betätigt wird, mit dem auch der Kolben (10) des Bremsaktuators betätigt wird.

25. Verfahren nach einem der Ansprüche 21 bis 24, **dadurch gekennzeichnet, dass** das Ölzuführmittel (39, 43) durch einen hydraulischen Druck betätigt wird, der unabhängig vom dem Betätigungsdruck für den Kolben (10) der Lamellenbremse (1) in dem hydraulischen Steuerungsgerät (22) des Getriebes erzeugt wird.

## Claims

1. Multiple-disc brake (1) in an automated transmission, having an inner disc carrier (4) and an outer disc carrier (6), having inner discs (3) and outer discs (5) which are arranged axially alternately on the disc carriers (4, 6), having friction linings (7) on the inner and/or outer discs (3, 5), having a piston (10) of a piston/cylinder arrangement which can be actuated by pressure medium and by means of which the inner discs (3) and outer discs (5) can be loaded with a force which closes the multiple-disc brake, having an end disc (9) or supporting disc (11) which is remote from the piston and forms an axial abutment for the multiple-disc assembly (14) which is constructed by the discs (3, 5, 9, 11), and in which the multiple-disc brake (1) and/or the components which surround it are configured in such a way that the discs (3, 5, 9, 11) can be wetted with a cooling oil, **characterized in that** the multiple-disc brake (1) is configured in such a way that the cooling oil (13) can be guided in radially different directions over and/or through the multiple-disc assembly (14) as a function of the operating state of the said multiple-disc brake (1), in such a way that, in the open state of the multiple-disc brake (1), the cooling oil (13) can be guided from the radial inside to the radial outside through the said multiple-disc brake (1) and, when the multiple-disc brake (1) is closed and/or in the case of a slipping operating mode of the said multiple-disc brake (1), can be guided from the radial outside to the radial inside through the said multiple-disc brake (1), the multiple-disc brake (1) being configured in the axial direction such that it is largely sealed against an outflow of cooling oil, and the outer disc carrier (6) having at least one radial opening (16) in the region of the multiple-disc assembly (14), through which at least one radial opening (16) cooling oil (13) can be fed to the multiple-disc assembly (14) when the multiple-disc brake (1) is closed and/or slipping and through which at least one radial opening (16) cooling oil (13) can be led away from the multiple-disc assembly (14) when the multiple-disc brake (1) is open.

2. Multiple-disc brake according to Claim 1, **characterized in that** the radial opening (16) in the outer disc carrier (6) opens into at least one annular space (15) which is formed between the end disc (9) and the supporting disc (11) at that axial end of the multiple-disc assembly (14) which is remote from the piston.

3. Multiple-disc brake according to Claim 1 or 2, **characterized in that** the axial sealing of the multiple-disc brake (1) is realized via separate sealing means (24) on the piston (10) and/or a piston-side end disc (8) and/or an outer disc (5) or inner disc (3) which is close to the piston and/or the end disc (9) which is remote from the piston and/or on the supporting disc (11) which is remote from the piston.

4. Multiple-disc brake according to Claim 1 or 2, **characterized in that** the axial sealing of the multiple-disc brake (1) is realized via metallic surfaces of sealing configuration on the piston (10) and/or a piston-side end disc (8) and/or an outer disc (5) or inner disc (3) which is close to the piston and/or the end disc (9) which is remote from the piston and/or on the supporting disc (11) which is remote from the piston.

5. Multiple-disc brake according to one of Claims 1 to 3, **characterized in that** the cooling oil (13) can be guided through at least partially radial grooves in the friction lining (7) of each inner disc (3) and/or outer disc (5), through which grooves the cooling oil (13) can flow from the inflow-side radial end to the outflow-side radial end of the discs (3, 5) of the multiple-disc assembly (14).

6. Multiple-disc brake according to one of Claims 1 to 5, **characterized in that** the inner disc carrier (4) has radial openings (42) for the inflow or outflow of cooling oil (13) out of or into the multiple-disc assembly (14), and **in that** a driving toothing system (23) on the outer disc carrier (6) has tooth gaps (27) in sections in the driving profile for forwarding the cooling oil (13) from the annular space (15) to the discs (3, 5).

7. Multiple-disc brake according to one of Claims 1 to 6, **characterized in that**, when the multiple-disc brake (1) is closed and/or slipping, the cooling oil (13) can be fed under static pressure by a separate oil-feeding means (19).

8. Multiple-disc brake according to Claim 7, **characterized in that**, for forwarding oil to the radially outer end of the opening (16) in the outer disc carrier (6), the oil-feeding means (19) can be guided against the said opening (16) in an annularly sealing manner and, after the stated operating modes are ended, can be removed from the outer disc carrier (6) in a manner which opens the opening (16).

9. Multiple-disc brake according to Claim 7 or 8, **characterized in that** the oil-feeding means (19) is configured as a radially displaceable feed pipe which is configured such that it can be displaced radially by a static cooling-oil pressure or by a control pressure which closes the multiple-disc brake (1) or moves it into slipping mode, the feed pipe having a seal (20) at its end which faces the outer disc carrier (6) radially, and a seal which reaches around the opening (16) being arranged on the radial outer side of the outer disc carrier (6).

10. Multiple-disc brake according to Claim 7, **characterized in that** the oil-feeding means (19) is configured as a hydraulic control valve (39, 43, 55).

11. Multiple-disc brake according to Claim 10, **characterized in that** the control valve (43) has a housing (31, 36, 40), in which a piston (32) which is loaded by a spring (33) is arranged such that it can be displaced axially, and in which the piston (32) can open and close a transfer hole (44) which is flow-connected to the opening (16) in the outer disc carrier (6), the housing (31, 36, 40) of the control valve (43) having an inflow hole (45), through which cooling oil (13) can flow in under pressure, the housing (31, 36, 40) of the control valve (43) having an outflow hole (46), through which cooling oil (13) can be discharged out of the housing (31, 36), and the housing (36) of the control valve (43) being configured integrally with the transmission housing or integrally with the housing of the hydraulic control unit (22) or as a separate housing.

12. Multiple-disc brake according to Claim 11, **characterized in that**, with regard to its control-valve axis, the control valve (43) is arranged in the transmission such that it is oriented in parallel transversely with respect to the transmission main axis or parallel to the transmission main axis or obliquely with respect to the transmission main axis.

13. Multiple-disc brake according to Claim 10, 11 or 12, **characterized in that** the control valve (39) is configured such that it can be switched by a separate control pressure.

14. Multiple-disc brake according to Claim 13, **characterized in that** the control valve (39) can be actuated by that control pressure, by way of which the piston (10) of the multiple-disc brake (1) can also be actuated.

15. Multiple-disc brake according to Claim 13 or 14, **characterized in that** the control valve (39) has a valve housing (40) with a control-pressure hole (49) for feeding the control-pressure medium (54), a control-pressure space (50), an inflow hole (45), an outflow hole (46) and a transfer hole (44) for the cooling oil (13), and a first control piston (51) which opens or closes the transfer hole (44) and a second control piston (52) which can be loaded by the control-pressure medium (54), the two control pistons (51, 52) being connected axially to one another via a piston rod (53) and it being possible for them to be loaded with an axial force by a spring (33).

16. Multiple-disc brake according to one of Claims 1 to 10, **characterized in that** the control valve (55) has a hollow-cylindrical housing (56) which is fastened radially below the opening (16) in the outer disc carrier (6) in such a way that the inner circumferential face of the housing (56) reaches around the opening (16), **in that** a piston (58) with a head hole (59) is received in the housing (56) such that it can be displaced axially, and **in that** lateral openings (60) which can be opened or closed by the piston (58) as a function of the position of the latter are formed in the housing (56).

17. Multiple-disc brake according to Claim 16, **characterized in that** the housing (56) of the hydraulic control valve (55) is inserted with its one axial end into a radial recess (61) in the transmission housing (12), and is arranged with its other end on the housing of the hydraulic transmission control unit (22) of the transmission, a sealing means (62) for sealing the cylinder space (63) being provided between the housing (56) of the hydraulic control valve (55) and the housing of the hydraulic transmission control unit (22).

18. Multiple-disc brake according to Claim 16 or 17, **characterized in that** the hydraulic control valve (55) is constructed in such a way that, when cooling oil (13) is fed into the cylinder space (63) from the radial outside to the radial inside, the piston (58) can be displaced in the housing (56) in a closing manner in the direction of the outer disc carrier (6), and in such a way that, when cooling oil (13) is fed from the radial inside to the radial outside, the piston (58) can be moved in the opposite direction, the said piston (58) opening the lateral openings (60) in the housing (56).

19. Multiple-disc brake according to Claim 18, **characterized in that that** movement of the piston (58) which opens the lateral openings (60) in the housing (56) is brought about by feeding cooling oil (13) to the piston (58) from the radial inside to the radial outside and/or by the restoring force of a spring (57) which is supported at one end on the piston (58) and at the other end on the radial outer side of the outer disc carrier (6) or the transmission housing (12).

20. Multiple-disc brake according to Claim 18, **characterized in that that** movement of the piston (58) which closes the lateral openings (60) in the housing (56) is brought about by feeding cooling oil (13) from the radial outside to the radial inside into the cylinder space (63) of the housing (56) below the head of the piston (58).

21. Method for operating a multiple-disc brake (1) according to one of the preceding claims, **characterized in that** cooling oil (13) can be guided, as a function of the operating state of the multiple-disc brake (1), in radially different directions through and/or over the multiple-disc assembly (14) of the said multiple-disc brake (1), the flow direction of the cooling oil (13) through and/or over the multiple-disc assembly (14) being set by actuation of an oil-feeding means (19, 39, 43) in such a way that, when the multiple-disc brake (1) is closed or slipping, the cooling oil (13) is guided through the multiple-disc assembly (14) from the radial outside to the radial inside and, when the multiple-disc brake (1) is open, is guided through and/or via the multiple-disc assembly (14) from the radial inside to the radial outside.

22. Method according to Claim 21, **characterized in that** the oil-feeding means (19, 39, 43) is actuated by a hydraulic pressure difference.

23. Method according to Claim 21, **characterized in that** the oil-feeding means (19, 39) is actuated by a differential pressure which is generated in the cooling-oil flow (13).

24. Method according to Claim 21, **characterized in that** the oil-feeding means (19, 39, 43) is actuated by a hydraulic pressure, by way of which the piston (10) of the brake actuator is also actuated.

25. Method according to one of Claims 21 to 24, **characterized in that** the oil-feeding means (39, 43) is actuated by a hydraulic pressure which is generated in the hydraulic control unit (22) of the transmission independently of the actuating pressure for the piston (10) of the multiple-disc brake (1).

## Revendications

1. Frein à disques multiples (1) dans une transmission automatique, avec un support de disques internes (4) et un support de disques externes (6), avec des disques externes (5) et des disques internes (3) disposés axialement en alternance sur les supports de disques (4, 6), avec des garnitures de friction (7) sur les disques internes et/ou externes (3, 5), avec un piston (10) d'un agencement cylindre-piston pouvant être commandé par du fluide sous pression, au moyen duquel les disques internes (3) et les disques externes (5) peuvent être sollicités par une force fermant le frein à disques multiples, avec un disque d'extrémité (9) éloigné du piston ou un disque de support (11), qui forme pour le paquet de disques (14) constitué des disques (3, 5, 9, 11) une butée axiale, et dans lequel le frein à disques multiples (1) et/ou les composants l'entourant sont réalisés de telle sorte que les disques (3, 5, 9, 11) puissent être mouillés avec une huile de refroidissement,
**caractérisé en ce que**
le frein à disques multiple (1) est réalisé de telle sorte que l'huile de refroidissement (13) puisse être acheminée en fonction de l'état de fonctionnement du frein dans des directions radialement différentes par le biais du et/ou à travers le paquet de disques (14), de telle sorte que l'huile de refroidissement (13) dans l'état ouvert du frein à disques multiples (1) puisse être acheminée à travers celui-ci depuis l'intérieur radialement jusqu'à l'extérieur radialement, et dans l'état fermé du frein à disques multiples (1) et/ou en mode de fonctionnement à glissement de ce dernier, depuis l'extérieur radialement jusqu'à l'intérieur radialement à travers celui-ci,
le frein à disques multiples (1) étant réalisé avec une étanchéité dans la direction axiale essentiellement vis-à-vis d'une sortie d'huile de refroidissement, et le support de disques externes (6) présentant dans la région du paquet de disques (14) au moins une ouverture radiale (16) à travers laquelle de l'huile de refroidissement (13) peut être acheminée au paquet de disques (14) lorsque le frein à disques multiples (1) est fermé et/ou glisse, et à travers laquelle de l'huile de refroidissement (13) peut être évacuée du paquet de disques (14) lorsque le frein à disques multiples (1) est ouvert.

2. Frein à disques multiples selon la revendication 1, **caractérisé en ce que** l'ouverture radiale (16) dans le support de disques externes (6) débouche dans au moins un espace annulaire (15), qui est réalisé sur l'extrémité axiale éloignée du piston du paquet de disques (14) entre le disque d'extrémité (9) et le disque de support (11).

3. Frein à disques multiples selon la revendication 1 ou 2, **caractérisé en ce que** l'étanchéité axiale du frein à disques multiples (1) est assurée par des moyens d'étanchéité séparés (24) sur le piston (10) et/ou sur un disque d'extrémité (8) du côté du piston et/ou un disque interne (3) proche du piston ou un disque externe (5) et/ou le disque d'extrémité (9) éloigné du piston et/ou sur le disque de support (11) éloigné du piston.

4. Frein à disques multiples selon la revendication 1 ou 2, **caractérisé en ce que** l'étanchéité axiale du frein à disques multiples (1) est assurée par le biais de surfaces métalliques réalisant l'étanchéité sur le piston (10) et/ou sur un disque d'extrémité (8) du côté du piston et/ou un disque interne (3) proche du piston ou un disque externe (5) et/ou sur le disque d'extrémité (9) éloigné du piston et/ou sur le disque de support (11) éloigné du piston.

5. Frein à disques multiples selon l'une quelconque des revendications 1 à 3, **caractérisé en ce que** l'huile de refroidissement (13) peut être acheminée par des rainures au moins partiellement radiales dans la garniture de friction (7) de chaque disque interne (3) et/ou disque externe (5), à travers lesquelles l'huile de refroidissement (13) peut s'écouler depuis une extrémité radiale du côté de l'afflux vers l'extrémité radiale du côté de l'évacuation des disques (3, 5) du paquet de disques (14).

6. Frein à disques multiples selon l'une quelconque des revendications 1 à 5, **caractérisé en ce que** le support de disques internes (4) présente des ouvertures radiales (42) pour l'afflux ou la sortie d'huile de refroidissement (13) hors du paquet de disques (14) ou dans celui-ci,
et **en ce qu'**une denture d'entraînement (23) sur le support de disques externes (6) présente en partie des espaces entre les dents (27) dans le profil d'entraînement pour conduire l'huile de refroidissement (13) de l'espace annulaire (15) aux disques (3, 5).

7. Frein à disques multiples selon l'une quelconque des revendications 1 à 6, **caractérisé en ce que** lorsque le frein à disques multiples (1) est fermé et/ou en mode de glissement, l'huile de refroidissement (13) peut être acheminée sous une pression statique à travers un moyen d'alimentation en huile séparé (19).

8. Frein à disques multiples selon la revendication 7, **caractérisé en ce que** le moyen d'alimentation en huile (19) pour conduire l'huile à l'extrémité radialement extérieure de l'ouverture (16) dans le support de disques externes (6) peut être rapproché de celle-ci de manière hermétique sous forme annulaire, et à la fin dudit mode de fonctionnement, peut être enlevé du support de disques externes (6) en libérant l'ouverture (16).

9. Frein à disques multiples selon la revendication 7 ou 8, **caractérisé en ce que** le moyen d'alimentation en huile (19) est réalisé sous forme de tube d'alimentation déplaçable radialement, qui est réalisé de manière déplaçable radialement par une pression d'huile de refroidissement statique ou par une pression de commande fermant le frein à disques multiples (1) ou l'amenant en mode de glissement,
le tube d'alimentation présentant, sur son extrémité tournée radialement vers le support de disques externes (6) un joint d'étanchéité (20) ou un joint d'étanchéité venant en prise autour de l'ouverture (16) étant disposé du côté extérieur radial du support de disques externes (6).

10. Frein à disques multiples selon la revendication 7, **caractérisé en ce que** le moyen d'alimentation en huile (19) est réalisé sous forme d'une soupape de commutation hydraulique (39, 43, 55).

11. Frein à disques multiples selon la revendication 10, **caractérisé en ce que** la soupape de commutation (43) présente un boîtier (31, 36, 40) dans lequel est disposé, de manière déplaçable axialement, un piston (32) sollicité par un ressort (33), et dans lequel le piston (32) peut libérer et fermer un alésage de transfert (44), qui est en liaison fluidique avec l'ouverture (16) dans le support de disques externes (6),
le boîtier (31, 36, 40) de la soupape de commutation (43) présentant un alésage d'alimentation (45) à travers lequel de l'huile de refroidissement (13) peut s'écouler sous pression,
le boîtier (31, 36, 40) de la soupape de commutation (43) présentant un alésage de sortie (46), à travers lequel de l'huile de refroidissement (13) peut être évacuée du boîtier (31, 36),
et le boîtier (36) de la soupape de commutation (43) étant réalisé d'une seule pièce avec le boîtier de la transmission ou d'une seule pièce avec le boîtier de l'appareil de commande hydraulique (22) ou sous forme de boîtier séparé.

12. Frein à disques multiples selon la revendication 11, **caractérisé en ce que** la soupape de commutation (43) est disposée dans la transmission parallèlement par rapport à son axe de soupape de commande et transversalement à l'axe principal de la transmission ou parallèlement à l'axe principal de la transmission ou obliquement par rapport à l'axe principal de la transmission.

13. Frein à disques multiples selon la revendication 10, 11 ou 12, **caractérisé en ce que** la soupape de commutation (39) est réalisée de manière à pouvoir être commutée par une pression de commande séparée.

14. Frein à disques multiples selon la revendication 13, **caractérisé en ce que** la soupape de commutation (39) peut être actionnée par la pression de commande avec laquelle le piston (10) du frein à disques multiple (1) peut aussi être actionné.

15. Frein à disques multiples selon la revendication 13 ou 14, **caractérisé en ce que** la soupape de commutation (39) présente un boîtier de soupape (40) avec un alésage de pression de commande (49) pour l'alimentation du fluide de pression de commande (54), un espace de pression de commande (50), un alésage d'alimentation (45), un alésage de sortie (46) et un alésage de transfert (44) pour l'huile de refroidissement (13), ainsi qu'un premier piston de commande (51) ouvrant ou fermant l'alésage de transfert (44) et un deuxième piston de commande (52) pouvant être sollicité par le moyen de pression de commande (54), les deux pistons de commande (51, 52) étant connectés axialement l'un à l'autre par le biais d'une tige de piston (53) et pouvant être sollicités par un ressort (33) avec une force axiale.

16. Frein à disques multiples selon l'une quelconque des revendications 1 à 10, **caractérisé en ce que** la soupape de commutation (55) présente un boîtier cylindrique creux (56) qui est fixé radialement sous l'ouverture (16) dans le support de disques externes (6) de telle sorte que la surface d'enveloppe intérieure du boîtier (56) vienne en prise autour de l'ouverture (16), **en ce qu'**un piston (58) avec un alésage de fond (59) est reçu de manière déplaçable axialement dans le boîtier (56), et **en ce que** des ouvertures latérales (60) sont réalisées dans le boîtier (56), lesquelles peuvent être ouvertes ou fermées en fonction de la position du piston (58) par ce dernier.

17. Frein à disques multiples selon la revendication 16, **caractérisé en ce que** le boîtier (56) de la soupape de commutation hydraulique (55) avec l'une de ses extrémités axiales est inséré dans un évidement radial (61) dans le boîtier de la transmission (12), et est disposé avec son autre extrémité sur le boîtier de l'appareil de commande hydraulique de la transmission (22) de la transmission, un moyen d'étanchéité (62) étant prévu pour réaliser l'étanchéité de l'espace cylindrique (63) entre le boîtier (56) de la soupape de commutation hydraulique (55) et le boîtier de l'appareil de commande hydraulique de la transmission (22).

18. Frein à disques multiples selon la revendication 16 ou 17, **caractérisé en ce que** la soupape de commutation hydraulique (55) est construite de telle sorte que dans le cas d'une alimentation en huile de refroidissement (13) dans l'espace cylindrique (63) radialement depuis l'extérieur jusque radialement à l'intérieur, le piston (58) puisse être déplacé dans le sens d'une fermeture dans la direction du support de disques externes (6) dans le boîtier (56), et **en ce que** dans le cas d'une alimentation en huile de refroidissement (13) radialement depuis l'intérieur jusque radialement vers l'extérieur, le piston (58) puisse être déplacé dans la direction opposée, celui-ci libérant les ouvertures latérales (60) dans le boîtier (56).

19. Frein à disques multiples selon la revendication 18, **caractérisé en ce que** le mouvement du piston (58) libérant les ouvertures latérales (60) dans le boîtier (56) est provoqué par une alimentation en huile de refroidissement (13) radialement depuis l'intérieur jusque radialement vers l'extérieur vers le piston (58) et/ou par la force de rappel d'un ressort (57), qui s'appuie à une extrémité sur le piston (58) et à l'autre extrémité sur le côté radial extérieur du support de disques externes (6) ou du boîtier de la transmission (12).

20. Frein à disques multiples selon la revendication 18, **caractérisé en ce que** le mouvement du piston (58) fermant les ouvertures latérales (60) dans le boîtier (56) est provoqué par une alimentation en huile de refroidissement (13) radialement depuis l'extérieur jusque radialement vers l'intérieur dans l'espace cylindrique (63) du boîtier (56) sous le fond du piston (58).

21. Procédé pour faire fonctionner un frein à disques multiples (1) selon l'une quelconque des revendications précédentes, **caractérisé en ce que** de l'huile de refroidissement (13) peut être conduite en fonction de l'état de fonctionnement du frein à disques multiples (1) dans des directions radialement différentes à travers et/ou par le biais de leur paquet de disques (14), le sens d'écoulement de l'huile de refroidissement (13) à travers et/ou par le biais du paquet de lamelles (14) étant ajusté par l'actionnement d'un moyen d'alimentation en huile (19, 39, 43), de telle sorte que l'huile de refroidissement (13), lorsque le frein à disques multiples (1) est fermé ou en mode de glissement, soit guidée radialement depuis l'extérieur jusque radialement vers l'intérieur à travers le paquet de lamelles (14), et lorsque le frein à disques multiples (1) est ouvert, soit guidée radialement depuis l'intérieur jusque radialement vers l'extérieur à travers et/ou par le biais du paquet de disques multiples (14).

22. Procédé selon la revendication 21, **caractérisé en ce que** le moyen d'alimentation en huile (19, 39, 43) est actionné par une différence de pression hydraulique.

23. Procédé selon la revendication 21, **caractérisé en ce que** le moyen d'alimentation en huile (19, 39) est actionné par une différence de pression produite dans le flux d'huile de refroidissement (13).

24. Procédé selon la revendication 21, **caractérisé en ce que** le moyen d'alimentation en huile (19, 39, 43) est actionné par une pression hydraulique avec laquelle le piston (10) de l'actionneur de frein est également actionné.

25. Procédé selon l'une quelconque des revendications 21 à 24, **caractérisé en ce que** le moyen d'alimentation en huile (39, 43) est actionné par une pression hydraulique qui est produite indépendamment de la pression d'actionnement pour le piston (10) du frein à disques multiples (1) dans l'appareil de commande hydraulique (22) de la transmission.
